# EUROPEAN PATENT APPLICATION

(11) **EP 4 804 411 A1**
(43) Date of publication of application: **09.09.2026**
(21) Application number: 26160279.1
(22) Date of filing: 24.02.2026
(51) Int. Cl.: H04B 1/00, H04B 1/04

(54) **INFORMATION PROCESSING APPARATUS, COMMUNICATION DEVICE, AND INFORMATION PROCESSING DEVICE**

(30) Priority: 07.03.2025 JP 2025036825
(71) Applicant: 1FINITY INC., Kawasaki-shi, Kanagawa 211-8588 (JP)
(72) Inventor: OKAWA, Yasuhiro, Kawasaki-shi, 211-8588 (JP); OTA, Tomoya, Kawasaki-shi, 211-8588 (JP); LOZHKIN, Alexander Nikolaevich, Kawasaki-shi, 211-8588 (JP); TOBISU, Yusuke, Kawasaki-shi, 211-8588 (JP); KAWANO, Yoichi, Kawasaki-shi, 211-8588 (JP); ISHIKAWA, Hiroyoshi, Kawasaki-shi, 211-8588 (JP)
(74) Representative: Haseltine Lake Kempner LLP

(57) **Abstract**

An information processing apparatus includes a peak detector configured to detect a peak of a signal based on a multiband signal in which a first baseband signal and a second baseband signal are combined, a ratio adjuster configured to adjust a ratio of a first peak suppression signal corresponding to the first baseband signal and a second peak suppression signal corresponding to the second baseband signal, according to amplitudes or power of the first baseband signal and the second baseband signal at a timing when the peak is detected by the peak detector, peak suppression circuitry configured to suppress the peak of the multiband signal using the first peak suppression signal and the second peak suppression signal having the adjusted ratio, and output circuitry configured to output the multiband signal with the suppressed peak.

## Description

### FIELD

Certain aspects of the embodiments discussed herein are related to information processing apparatuses, communication devices, and information processing methods.

### BACKGROUND

Conventionally, there is a proposed peak suppression device including a first peak position detector, a second peak position detector, a suppression signal generator, and an adder. The first peak position detector detects a position of an amplitude of a transmission signal on a time base as a first peak position when an amplitude variation of the transmission signal is a convex function and exceeds a threshold value. In a case where the amplitude of the transmission signal corresponding to a position separated by a predetermined distance on the time base from the first peak position detected by the first peak position detector exceeds the threshold value, the second peak position detector detects this position separated by the predetermined distance from the first peak position as a second peak position. The suppression signal generator generates a suppression signal for suppressing the amplitude of the transmission signal to the threshold value or lower, using the amplitude and phase of the transmission signal corresponding to the first peak position and the second peak position detected by the first peak position detector and the second peak position detector, respectively. The adder adds the suppression signal generated by the suppression signal generator to the transmission signal (refer to Japanese Laid-Open Patent Publication No. 2013-118447, for example).

On the other hand, there is a proposed communication device having a peak suppression device, a digital-to-analog converter, a frequency converter, a combiner, and an amplifier. The peak suppression device calculates, as a maximum power value, power of a composite signal of a first baseband signal and a second baseband signal when a phase of a first carrier wave and a phase of a second carrier wave match. The peak suppression device generates a first suppression signal and a second suppression signal having values other than zero when the maximum power value is greater than a power threshold value. The peak suppression device generates a third baseband signal by reflecting the value of the first suppression signal on the first baseband signal, and generates a fourth baseband signal by reflecting the value of the second suppression signal on the second baseband signal (refer to International Publication Pamphlet No. 2014/141335, for example).

The peak suppression device proposed in Patent Document 1 is designed for single band operation, and the communication device proposed in Patent Document 2 is designed for multiband operation.

In a device designed for multiband operation and capable of performing a peak suppression, when an instantaneous bandwidth (IBW) of a multiband composite signal becomes large, the peak suppression may not function even if the peak suppression is enhanced.

### SUMMARY

It is an object in one aspect of the embodiments of the present disclosure to provide an information processing apparatus, a communication device, and an information processing method capable of performing a peak suppression of a multiband composite signal.

According to one aspect of the embodiments of the present disclosure, an information processing apparatus includes a peak detector configured to detect a peak of a signal based on a multiband signal in which a first baseband signal and a second baseband signal are combined; a ratio adjuster configured to adjust a ratio of a first peak suppression signal corresponding to the first baseband signal and a second peak suppression signal corresponding to the second baseband signal, according to amplitudes or power of the first baseband signal and the second baseband signal at a timing when the peak is detected by the peak detector; peak suppression circuitry configured to suppress the peak of the multiband signal using the first peak suppression signal and the second peak suppression signal having the adjusted ratio; and output circuitry configured to output the multiband signal with the suppressed peak.

The object and advantages of the embodiments will be realized and attained by means of the elements and combinations particularly pointed out in the claims.

It is to be understood that both the foregoing general description and the following detailed description are exemplary and explanatory and not restrictive of the invention, as claimed.

### BRIEF DESCRIPTION OF THE DRAWINGS

FIG. 1 is a diagram illustrating an example of a configuration of a radio unit according to an embodiment;
FIG. 2 is a diagram illustrating an example of a configuration of a peak suppression device according to the embodiment;
FIG. 3 is a diagram for explaining an example of a peak detection by a peak detector according to the embodiment;
FIG. 4 is a flow chart illustrating an example of a procedure performed by the peak suppression device according to the embodiment;
FIG. 5 is a diagram illustrating an example of a relationship between signal levels of baseband signals x₁(n) and x₂(n) of bands 1 and 2 and signal levels of a first peak suppression signal and a second peak suppression signal;
FIG. 6 is a diagram illustrating an example of a peak suppression by a peak suppression device of a comparative example;
FIG. 7 is a diagram illustrating an example of peak suppression by the peak suppression device according to the embodiment;
FIG. 8 is a diagram illustrating an example of a configuration of the peak suppression device according to a first modification of the embodiment;
FIG. 9 is a flow chart illustrating an example of a procedure performed by the peak suppression device according to the first modification of the embodiment;
FIG. 10 is a diagram illustrating an example of a configuration of the peak suppression device according to a second modification of the embodiment;
FIG. 11 is a diagram illustrating an example of a configuration of the peak suppression device according to a third modification of the embodiment;
FIG. 12 is a flow chart illustrating an example of a procedure performed by the peak suppression device according to the third modification of the embodiment;
FIG. 13 is a diagram illustrating an example of a configuration of the peak suppression device according to a fourth modification of the embodiment;
FIG. 14 is a diagram illustrating examples of a first impulse response signal and a second impulse response signal that are output from impulse response generators by shifting frequencies for the bands 1 and 2; and
FIG. 15 is a diagram illustrating an example of a configuration of the peak suppression device according to a fifth modification of the embodiment.

### DESCRIPTION OF EMBODIMENTS

Hereinafter, an information processing apparatus, a communication device, and an information processing method according to embodiments of the present disclosure will be described.

### <Embodiments>

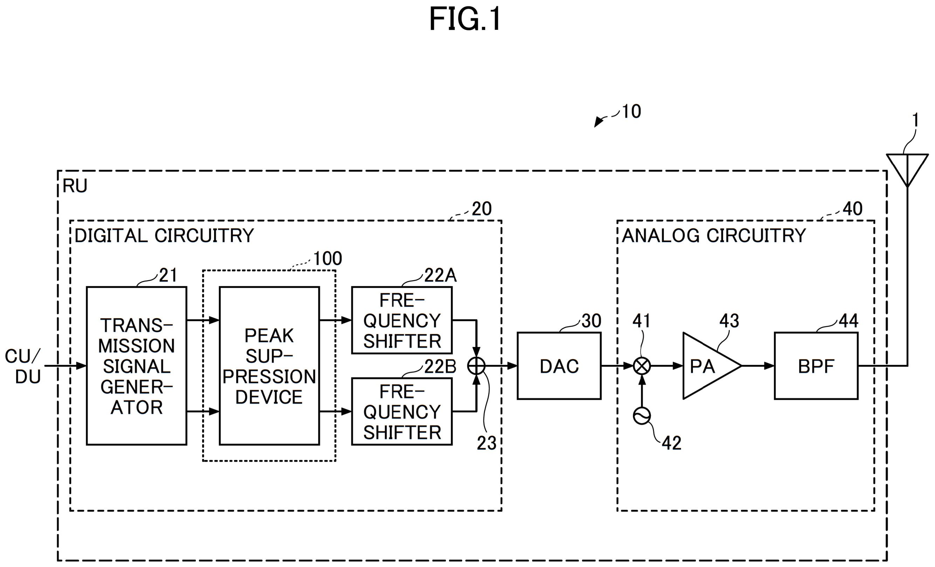

FIG. 1 is a diagram illustrating an example of a configuration of a radio unit according to an embodiment. A radio unit (RU) 10 illustrated in FIG. 1 is an example of a communication device, and may be a so-called base station. The RU 10 is provided between an antenna 1 and a central unit (CU) that includes a distributed unit (DU).

For example, the radio waves transmitted or received by the RU 10 via the antenna 1 may be radio waves in a millimeter-wave band of the fifth generation mobile telecommunication system (5G) or the like, radio waves in a frequency band of 1 GHz to 30 GHz including the Sub-6 band, or radio waves in an ultra-high frequency band of 100 GHz or higher envisioned for the sixth generation mobile telecommunication system (6G) or the like.

In recent years, a multiband RU is widely used as a countermeasure against an increase in communication traffic. In a conventional single-band RU, it is necessary to provide an individual power amplifier for each band, whereas in the multiband RU, a single power amplifier amplifies a multiband signal in common. Hence, the number of devices or components included the multiband RU can be reduced to reduce a mounting area required for the multiband RU, and the size of the multiband RU can be reduced. For this reason, it is possible to minimize installation space and to improve an installation efficiency of the multiband RU. The RU 10 of the embodiment is compatible with the multiband.

### <RU 10>

The RU 10 includes digital circuitry 20, a digital-to-analog converter (DAC) 30, and analog circuitry 40. The digital circuitry 20 may be implemented by a field programmable gate array (FPGA), for example. The analog circuitry 40 is an example of a transmission circuit.

The digital circuitry 20 includes a transmission signal generator 21, the peak suppression device 100, frequency shifters 22A and 22B, and an adder 23. The peak suppression device 100 is an example of an information processing apparatus. A peak suppression method implemented by the peak suppression device 100 is an example of an information processing method.

The digital circuitry 20 may be implemented by a computer that includes a central processing unit (CPU), a random access memory (RAM), a read only memory (ROM), an input/output interface, an internal bus, or the like. In this case, the CPU may execute one or more programs to implement the functions of the transmission signal generator 21, the peak suppression device 100, the frequency shifters 22A and 22B, and the adder 23.

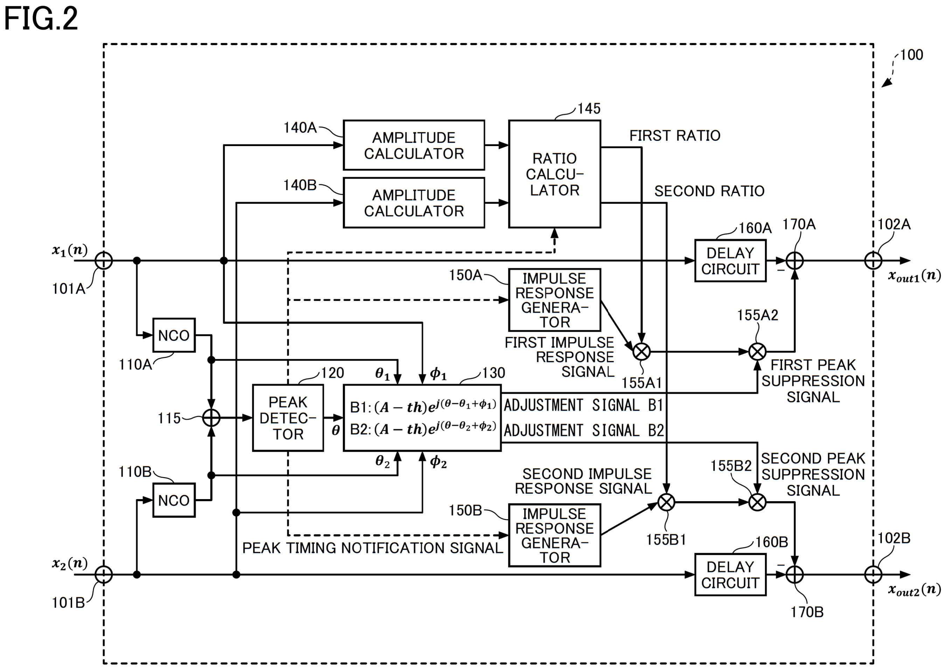

The transmission signal generator 21 can generate multiband baseband signals (transmission signals), and generates the baseband signals for two bands, for example. The peak suppression device 100 performs peak suppression on the baseband signals for two bands input from the transmission signal generator 21. The baseband signals for two bands, subjected to the peak suppression by the peak suppression device 100, are input to the frequency shifters 22A and 22B and are shifted to a frequency for a first band and a frequency for a second band, respectively. The baseband signals having the frequencies shifted by the frequency shifters 22A and 22B are combined by the adder 23 and output as a composite transmission signal. The composite transmission signal may also be referred to as a combined transmission signal or a synthesized transmission signal. The peak suppression device 100 will be described later in detail with reference to FIG. 2 and subsequent figures.

The DAC 30 converts the composite transmission signal combined by the adder 23 into an analog transmission signal, and outputs the analog transmission signal to the analog circuitry 40.

The analog circuitry 40 includes a multiplier 41, an oscillator 42, and a power amplifier (PA) 43, and a bandpass filter (BPF) 44. The multiplier 41 multiplies the analog transmission signal input from the DAC 30 by an up-conversion signal input from the oscillator 42, and outputs a multiplication result signal to the PA 43. The oscillator 42 functions as an up-converter. The PA 43 amplifies the up-converted analog transmission signal, and outputs the amplified analog transmission signal to the BPF 44. The PA 43 is an example of a transmission amplifier. The BPF 44 transmits only a desired band of the analog transmission signal amplified by the PA 43 to the antenna 1.

### <Peak Suppression Device 100>

FIG. 2 is a diagram illustrating an example of a configuration of the peak suppression device 100 according to the embodiment.

The peak suppression device 100 includes input terminals 101A and 101B, output terminals 102A and 102B, numerically controlled oscillators (NCOs) 110A and 110B, an adder 115, a peak detector 120, an adjustment signal generator 130, an amplitude calculators 140A and 140B, a ratio calculator 145, an impulse response generators 150A and 150B, multipliers 155A1 and 155A2, multipliers 155B1 and 155B2, delay circuits 160A and 160B, and subtractors 170A and 170B.

The input terminal 101A is an example of a first input terminal, and the input terminal 101B is an example of a second input terminal. The NCO 110A is an example of a first frequency shifter, and the NCO 110B is an example of a second frequency shifter. The adder 115 is an example of a first adder. The amplitude calculator 140A is an example of a first amplitude calculator, and the amplitude calculator 140B is an example of a second amplitude calculator. The ratio calculator 145 is an example of a ratio derivation circuit. The impulse response generator 150A is an example of a first impulse response generator, and the impulse response generator 150B is an example of a second impulse response generator. The multipliers 155A1 and 155A2 are examples of a first multiplier, and the multipliers 155B1 and 155B2 are examples of a second multiplier. The multipliers 155A1 and 155A2 and the multipliers 155B1 and 155B2 are an example of a peak suppression signal generator. The subtractor 170A is an example of a first subtractor, and the subtractor 170B is an example of a second subtractor. The subtractors 170A and 170B are an example of peak suppression circuitry. The amplitude calculators 140A and 140B, the ratio calculator 145, the impulse response generators 150A and 150B, the multipliers 155A1 and 155A2, and the multipliers 155B1 and 155B2 are an example of a ratio adjustment circuit.

The digital circuitry 20 is implemented by a FPGA, for example, and thus, the peak suppression device 100 may be implemented by the FPGA. The peak suppression device 100 may be implemented by a computer. In this case, the CPU may execute one or more programs to implement the functions of the NCOs 110A and 110B, the adder 115, the peak detector 120, the adjustment signal generator 130, the amplitude calculators 140A and 140B, the ratio calculator 145, the impulse response generators 150A and 150B, the multipliers 155A1 and 155A2, the multipliers 155B1 and 155B2, the delay circuits 160A and 160B, and the subtractors 170A and 170B.

### <Input Terminals 101A and 101B>

The input terminals 101A and 101B are connected to the transmission signal generator 21 illustrated in FIG. 1. Baseband signals x₁(n) and x₂(n) are input to the input terminals 101A and 101B, respectively. The input terminals 101A and 101B are connected to the NCOs 110A and 110B and the amplitudes calculators 140A and 140B inside the peak suppression device 100.

The baseband signal x₁(n) is an example of a first baseband signal, and the baseband signal x₂(n) is an example of a second baseband signal. The frequencies of the baseband signals x₁(n) and x₂(n) are identical, for example, but the frequencies of the baseband signals x₁(n) and x₂(n) may be different from each other.

n denotes a time index of the baseband signals x₁(n) and x₂(n). As an example, in a case where the baseband signals x₁(n) and x₂(n) are baseband signals for 5G, the time index n is defined by the 5G technical standards or the like.

### <Output Terminals 102A and 102B>

The output terminals 102A and 102B are connected to the frequency shifters 22A and 22B illustrated in FIG. 1, and output baseband signals xₒᵤₜ₁(n) and xₒᵤₜ₂(n), respectively. The baseband signals xₒᵤₜ₁(n) and xₒᵤₜ₂(n) are examples of a signal having a first frequency and a signal having a second frequency, respectively. The output terminals 102A and 102B are connected to outputs of the subtractors 170A and 170B inside the peak suppression device 100, respectively. The output terminals 102A and 102B are an example of output circuitry configured to output a multiband signal with the suppressed peak.

The baseband signals xₒᵤₜ₁(n) and xₒᵤₜ₂(n) are transmission signals having the peaks thereof suppressed by the peak suppression device 100, and are shifted to frequencies for the first band and the second band by the frequency shifters 22A and 22B, respectively, before being combined by the adder 23 and output as a composite transmission signal.

### <NCOs 110A and 110B>

The NCO 110A shifts the frequency of the baseband signal x₁(n) to the frequency for the first band. The NCO 110B shifts the frequency of the baseband signal x₂(n) to the frequency for the second band.

The first band and the second band are two bands or three or more bands apart from each other, for example. The band difference between the first band and the second band is approximately 300 MHz, for example, and the first band and the second band are separated by five bands or more, for example. The first band and the second band exhibit the effects which will be described later even when the first band and the second band are two adjacent bands, for example.

Output terminals of the NCOs 110A and 110B are connected to the adder 115 and the adjustment signal generator 130.

### <Adder 115>

An output terminal of the adder 115 is connected to the peak detector 120. The adder 115 outputs a composite signal that is obtained by adding the baseband signals x₁(n) and x₂(n) input from the NCOs 110A and 110B, and supplies the composite signal to the peak detector 120.

### <Peak Detector 120>

An output terminal of the peak detector 120 is connected to the adjustment signal generator 130. The peak detector 120 detects a peak of the composite signal input from the adder 115, and outputs an amplitude A of the peak of the composite signal and a phase θ of the peak of the composite signal to the adjustment signal generator 130.

When the peak detector 120 detects the peak of the composite signal, the peak detector 120 notifies the ratio calculator 145 and the impulse response generators 150A and 150B of the peak detection by a peak timing notification signal, as indicated by a dashed arrow.

### <Adjustment Signal Generator 130>

The adjustment signal generator 130 is connected to the input terminals 101A and 101B, the NCOs 110A and 110B, the multiplier 155A1, the multiplier 155B1, and the peak detector 120. The amplitude A of the peak and the phase θ of the peak of the composite signal are input from the peak detector 120 to the adjustment signal generator 130 at the timing when the peak detector 120 detects the peak of the composite signal.

When the amplitude A and the phase θ of the peak of the composite signal are input from the peak detector 120, the adjustment signal generator 130 acquires a phase ϕ₁ of the baseband signal x₁(n), a phase ϕ₂ of the baseband signal x₂(n), a phase θ₁ of the baseband signal x₁(n) shifted to the frequency for the first band, and a phase θ₂ of the baseband signal x₂(n) shifted to the frequency for the second band at the timing when the adjustment signal generator 130 receives the amplitude A and the phase θ of the peak of the composite signal. The baseband signal x₁(n) shifted to the frequency for the first band is an output of the NCO 110A, and the baseband signal x₂(n) shifted to the frequency for the second band is an output of the NCO 110B.

The adjustment signal generator 130 has a threshold value th with respect to the amplitude A of the peak of the composite signal. The adjustment signal generator 130 generates adjustment signals B1 and B2 when the adjustment signal generator 130 acquires the amplitude A and the phase θ of the peak of the composite signal and the phases ϕ₁, ϕ₂, θ₁, and θ₂ at the timing when the peak is detected.

The adjustment signal B1 is an example of a first adjustment signal, and is output to the multiplier 155A2. The adjustment signal B2 is an example of a second adjustment signal, and is output to the multiplier 155B2. The adjustment signals B1 and B2 are signals for adjusting amplitudes and phases of a first impulse response signal and a second impulse response signal.

The adjustment signals B1 and B2 can be expressed by the following formulas (1) and (2). $\left(A-th\right) {e}^{j \left(θ-{θ}_{1}+{ϕ}_{1}\right)}$ $\left(A-th\right) {e}^{j \left(θ-{θ}_{2}+{ϕ}_{2}\right)}$

The amplitudes of the adjustment signals B1 and B2 have a value (A - th) which is obtained by subtracting the threshold value th from the peak amplitude A of the composite signal. That is, the amplitudes of the adjustment signals B1 and B2 have values corresponding to an amount of the amplitude A of the peak of the composite signal exceeding the threshold value th. In addition, the adjustment signal B1 has a phase (θ - θ₁ + ϕ₁) which is obtained by subtracting a phase difference between the phases θ₁ and ϕ₁ from the phase θ of the peak of the composite signal. The adjustment signal B2 has a phase (θ - θ₂ + ϕ₂) which is obtained by subtracting a phase difference between the phases θ₂ and ϕ₂ from the phase θ of the peak of the composite signal.

In order to set an amplitude of a first peak suppression signal for suppressing the peak of the baseband signal x₁(n) and an amplitude of a second peak suppression signal for suppressing the peak of the baseband signal x₂(n) to the value (A - th), the amplitudes of the adjustment signals B1 and B2 are set to the value (A - th). In addition, the phases of the adjustment signals B1 and B2 are set to (θ - θ₁ + ϕ₁) and (θ - θ₂ + ϕ₂), respectively, so that after the baseband signals xₒᵤₜ₁(n) and xₒᵤₜ₂(n) are shifted to the frequencies for the first band and the second band by the frequency shifters 22A and 22B, respectively, and are finally combined, the peaks of the combined baseband signal are suppressed.

### <Amplitude Calculators 140A and 140B>

The amplitude calculator 140A has an input terminal connected to the input terminal 101A and an output terminal connected to the ratio calculator 145. The amplitude calculator 140B has an input terminal connected to the input terminal 101B and an output terminal connected to the ratio calculator 145.

The amplitude calculator 140A calculates a first amplitude D1ₙ of the baseband signal x₁(n) input from the input terminal 101A, and outputs the first amplitude D1ₙ to the ratio calculator 145. The second amplitude calculator 140B calculates a second amplitude D2ₙ of the baseband signal x₂(n) input from the input terminal 101B, and outputs the second amplitude D2ₙ to the ratio calculator 145.

### <Ratio Calculator 145>

At the timing when the peak is detected by the peak detector 120, the ratio calculator 145 calculates a first ratio {D1ₙ/(D1ₙ + D2ₙ)} of the first amplitude D1ₙ with respect to the first amplitude D1ₙ and the second amplitude D2ₙ, and a second ratio {D2ₙ/(D1ₙ + D2ₙ)} of the second amplitude D2ₙ with respect to the first amplitude D1ₙ and the second amplitude D2ₙ.

The ratio calculator 145 has two output terminals. One output terminal of the ratio calculator 145 is connected to one input terminal of the multiplier 155A1, and the other output terminal of the ratio calculator 145 is connected to one input terminal of the multiplier 155B1. The ratio calculator 145 outputs the first ratio {D1ₙ/(D1ₙ + D2ₙ)} and the second ratio {D2ₙ/(D1ₙ + D2ₙ)} to the multipliers 155A1 and 155B1, respectively.

### <Impulse Response Generator 150A and 150B>

An output terminal of the impulse response generator 150A is connected to the other input terminal of the multipliers 155A1, and an output terminal of the impulse response generator 150B is connected to the other input terminal of the multiplier 155B1. When the peak timing notification signal from the peak detector 120 is input to the impulse response generators 150A and 150B, the impulse response generator 150A outputs the first impulse response signal to the multiplier 155A1, and the impulse response generator 150B outputs the second impulse response signal to the multiplier 155B1.

The impulse response generators 150A and 150B generate impulse responses by truncating the Sinc function in finite time. For this reason, it is possible to reduce the size of the digital circuitry 20.

### <Multipliers 155A1 and 155B1>

The multiplier 155A1 has an output terminal connected to one input terminal of the multiplier 155A2. The multiplier 155B1 has an output terminal connected to one input terminal of the multiplier 155B2. The multiplier 155A1 multiplies the first ratio {D1ₙ/(D1ₙ + D2ₙ)} to the first impulse response signal, and outputs the multiplied signal to the multiplier 155A2. The multiplier 155B1 multiplies the second ratio {D2ₙ/(D1ₙ + D2ₙ)} to the second impulse response signal, and outputs the multiplied signal to the multiplier 155B2.

### <Multipliers 155A2 and 155B2>

The multiplier 155A2 has an output terminal connected to a negative input terminal of the subtractor 170A. The multiplier 155B2 has an output terminal connected to a negative input terminal of the subtractor 170B. The multiplier 155A2 performs a complex multiplication of the adjustment signal B1 with the first impulse response signal multiplied by the first ratio {D1ₙ/(D1ₙ + D2ₙ)}, to generate the first peak suppression signal. The multiplier 155B2 performs a complex multiplication of the adjustment signal B2 with the second impulse response signal multiplied by the second ratio {D2ₙ/(D1ₙ + D2ₙ)}, to generate the second peak suppression signal. The multipliers 155A2 and 155B2 output the first peak suppression signal and the second peak suppression signal to the negative input terminals of the subtractors 170A and 170B, respectively.

### <Delay Circuits 160A and 160B>

The delay circuit 160A is inserted in series between the input terminal 101A and a positive input terminal of the subtractor 170A. The delay circuit 160A delays the baseband signal x₁(n) input from the input terminal 101A by a delay time equal to a time required from a time when the baseband signal x₁(n) is input to input terminal 101A to a time when the baseband signal x₁(n) reaches the subtractor 170A via the NCO 110A, the adder 115, the peak detector 120, the adjustment signal generator 130, and the multiplier 155A2. The delay circuit 160A outputs the delayed baseband signal x₁(n) to the positive input terminal of the subtractor 170A.

Similarly, the delay circuit 160B is inserted in series between the input terminal 101B and a positive input terminal of the subtractor 170B. The delay circuit 160B delays the baseband signal x₂(n) by a delay time equal to a time required from a time when the baseband signal x₂(n) is input to input terminal 101B to a time when the baseband signal x₂(n) reaches the subtractor 170B via the NCO 110B, the adder 115, the peak detector 120, the adjustment signal generator 130, and the multiplier 155B2. The delay circuit 160B outputs the delayed baseband signal x₂(n) to the positive input terminal of the subtractor 170B. The delay time by which the delay circuit 160A delays the baseband signal x₁(n) is identical to the delay time by which the delay circuit 160B delays the baseband signal x₂(n).

### <Subtractors 170A and 170B>

The subtractor 170A has an output terminal connected to the output terminal 102A, and the subtractor 170B has an output terminal connected to the output terminal 102B. The subtractor 170A subtracts the first peak suppression signal from the baseband signal x₁(n) input from the delay circuit 160A to generate the baseband signal xₒᵤₜ₁(n). The subtractor 170B subtracts the second peak suppression signal from the baseband signal x₂(n) input from the delay circuit 160B to generate the baseband signal xₒᵤₜ₂(n). The subtractors 170A and 170B output the baseband signals xₒᵤₜ₁(n) and xₒᵤₜ₂(n) to the output terminals 102A and 102B, respectively.

### <Description of Formulas>

A composite signal x(n) of the baseband signals x₁(n) and x₂(n) can be expressed by the following formula (3). $x \left(n\right) = {x}_{1} \left(n\right) + {x}_{2} \left(n\right)$

The first amplitude D1ₙ(n) of the baseband signal x₁(n), the second amplitude D2ₙ(n) of the baseband signal x₂(n), and an amplitude Dₙ of the composite signal x(n) can be expressed by the following formulas (4A), (4B), and (4C). $D {1}_{n} = \left|{x}_{1}\left(n\right)\right|$ $D {2}_{n} = \left|{x}_{2}\left(n\right)\right|$ ${D}_{n} = \left|x\left(n\right)\right|$

Further, when the time index n at the time when the peak of the amplitude of the composite signal x(n) is detected by the peak detector 120 is denoted by N_{PL}, and impulse response coefficients of the first impulse response signal and the second impulse response signal are denoted by BB_{IMP1} and BB_{IMP2}, respectively, a first peak suppression signal cp₁(n + N_{PL}) and a second peak suppression signal cp₂(n + N_{PL}) applied to the baseband signals x₁(n) and x₂(n) can be expressed by the following formulas (5A) and (5B).$\begin{matrix}{cp}_{1} \left(n+{N}_{PL}\right) = \frac{{D 1}_{n}}{{D 1}_{n} + {D 2}_{n}} ⋅ \left(A-th\right) ⋅ {e}^{j \left(θ-{θ}_{1}+{ϕ}_{1}\right)} ⋅ {BB}_{IMP 1} \\ = \frac{\left|{x}_{1}\left({N}_{PL}\right)\right|}{\left|{x}_{1}\left({N}_{PL}\right)\right| + \left|{x}_{2}\left({N}_{PL}\right)\right|} ⋅ \left(A-th\right) ⋅ {e}^{{j \left(θ-{θ}_{1}+{ϕ}_{1}\right)}^{}} ⋅ {BB}_{IMP 1} \\ = \frac{\left|{x}_{1}\left({N}_{PL}\right)\right|}{\left|{x}_{1}\left({N}_{PL}\right)\right| + \left|{x}_{2}\left({N}_{PL}\right)\right|} ⋅ \left(A-th\right) ⋅ {e}^{{j \left(θ-\left({ϕ}_{1}+{ω}_{1}t\right)+{ϕ}_{1}\right)}^{}} ⋅ {BB}_{IMP 1} \\ = \frac{\left|{x}_{1}\left({N}_{PL}\right)\right|}{\left|{x}_{1}\left({N}_{PL}\right)\right| + \left|{x}_{2}\left({N}_{PL}\right)\right|} ⋅ \left(A-th\right) ⋅ {e}^{{j \left(θ-{ω}_{1}t\right)}^{}} ⋅ {BB}_{IMP 1}\end{matrix}$ $\begin{matrix}{cp}_{2} \left(n+{N}_{PL}\right) = \frac{{D 2}_{n}}{{D 1}_{n} + {D 2}_{n}} ⋅ \left(A-th\right) ⋅ {e}^{j \left(θ-{θ}_{2}+{ϕ}_{2}\right)} ⋅ {BB}_{IMP 2} \\ = \frac{\left|{x}_{2}\left({N}_{PL}\right)\right|}{\left|{x}_{1}\left({N}_{PL}\right)\right| + \left|{x}_{2}\left({N}_{PL}\right)\right|} ⋅ \left(A-th\right) ⋅ {e}^{{j \left(θ-{θ}_{2}+{ϕ}_{2}\right)}^{}} ⋅ {BB}_{IMP 2} \\ = \frac{\left|{x}_{2}\left({N}_{PL}\right)\right|}{\left|{x}_{1}\left({N}_{PL}\right)\right| + \left|{x}_{2}\left({N}_{PL}\right)\right|} ⋅ \left(A-th\right) ⋅ {e}^{{j \left(θ-\left({ϕ}_{2}+{ω}_{2}t\right)+{ϕ}_{2}\right)}^{}} ⋅ {BB}_{IMP 2} \\ = \frac{\left|{x}_{2}\left({N}_{PL}\right)\right|}{\left|{x}_{1}\left({N}_{PL}\right)\right| + \left|{x}_{2}\left({N}_{PL}\right)\right|} ⋅ \left(A-th\right) ⋅ {e}^{{j \left(θ-{ω}_{2}t\right)}^{}} ⋅ {BB}_{IMP 2}\end{matrix}$

The baseband signals xₒᵤₜ₁(n) and xₒᵤₜ₂(n) output from the subtractors 170A and 170B, respectively, can be expressed by the following formulas (6A) and (6B). ${x}_{out 1} \left(n\right) = {x}_{1} \left(n\right) - {cp}_{1} \left(n+{N}_{PL}\right)$ ${x}_{out 2} \left(n\right) = {x}_{2} \left(n\right) - {cp}_{2} \left(n+{N}_{PL}\right)$

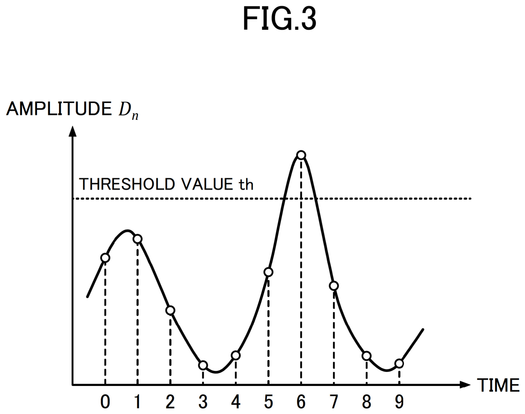

FIG. 3 is a diagram for explaining an example of a peak detection by the peak detector 120. In FIG. 3, the abscissa represents the time, and time index n from 0 to 9 are indicated. The ordinate represents the amplitude Dₙ of the composite signal x(n), and indicates the threshold value th.

As an example, in a case where the peak detector 120 detects the amplitude Dₙ of the composite signal x(n) illustrated in FIG. 3 when the time index n is from 0 to 9, an amplitude D₆ when the time index n is 6 exceeds the threshold value th. Thus, the peak detector 120 sets the amplitude A of the peak of the composite signal x(n) to the amplitude D₆ when the time index n is 6.

### <Flow Chart>

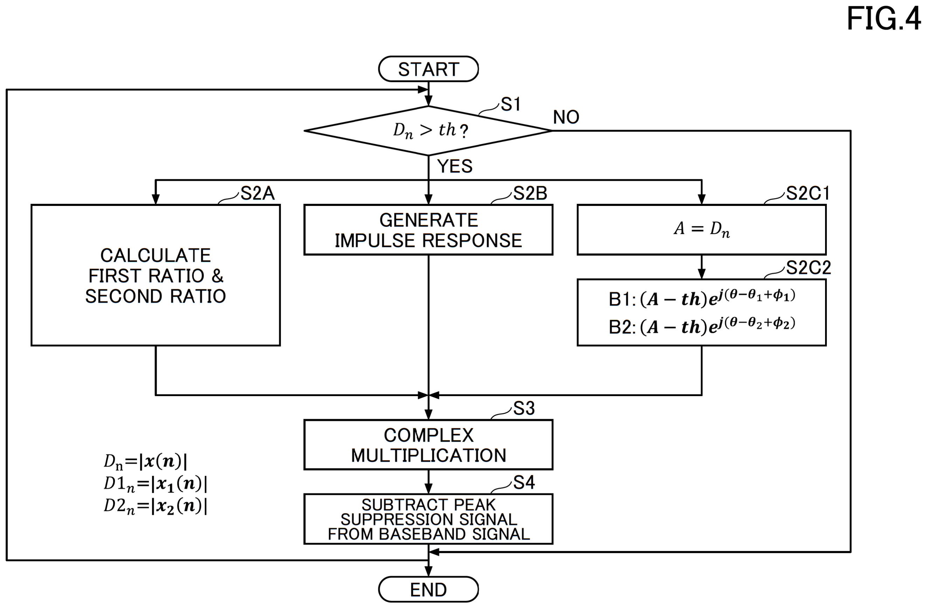

FIG. 4 is a flow chart illustrating an example of a procedure performed by the peak suppression device 100.

The peak detector 120 determines whether or not the amplitude Dₙ of the composite signal x(n) is greater than the threshold value th (step S1).

When the peak detector 120 determines that the amplitude Dₙ of the composite signal x(n) is greater than the threshold value th (S1: YES), the peak suppression device 100 performs the processes of steps S2A, S2B, S2C1, and S2C2 in parallel.

The ratio calculator 145 calculates the first ratio {D1ₙ/(D1ₙ + D2ₙ)} and the second ratio {D2ₙ/(D1ₙ + D2ₙ)} (step S2A).

The impulse response generators 150A and 150B generate the first impulse response signal and the second impulse response signal, respectively (step S2B).

The peak detector 120 sets the peak of the amplitude Dn of the composite signal x(n) to A = Dₙ (step S2C1).

The adjustment signal generator 130 generates the adjustment signals B1 and B2 (step S2C2).

The multipliers 155A1 and 155A2 and the multipliers 155B1 and 155B2 perform multiplication processes (step S3). That is, the multiplier 155A1 multiplies the first ratio {D1ₙ/(D1ₙ + D2ₙ)} to the first impulse response signal, and the multiplier 155A2 performs a complex multiplication of the adjustment signal B1 with the first impulse response signal multiplied by the first ratio {D1ₙ/(D1ₙ + D2ₙ)}, to generate the first peak suppression signal. Further, the multiplier 155B1 multiplies the second ratio {D2ₙ/(D1ₙ + D2ₙ)} to the second impulse response signal, and the multiplier 155B2 performs a complex multiplication of the adjustment signal B2 with the second impulse response signal multiplied by the second ratio {D2ₙ/(D1ₙ + D2ₙ)}, to generate the second peak suppression signal.

The subtractors 170A and 170B perform subtraction processes (step S4). That is, the subtractor 170A subtracts the first peak suppression signal from the baseband signal x₁(n) to generate the baseband signal xₒᵤₜ₁(n). The subtractor 170B subtracts the second peak suppression signal from the baseband signal x₂(n) to generate a baseband signal xₒᵤₜ₂(n).

The peak suppression device 100 ends the series of processes. The peak suppression device 100 repeatedly performs the processes of steps S1 through S4.

When the peak detector 120 determines that the amplitude Dn of the composite signal x(n) is not greater than the threshold value th (S1: NO), the peak suppression device 100 outputs the baseband signals x₁(n) and x₂(n) input to the input terminals 101A and 101B from the output terminals 102A and 102B, respectively, without performing the peak suppression on the baseband signals x₁(n) and x₂(n).

### <First Peak Suppression Signal and Second Peak Suppression Signal>

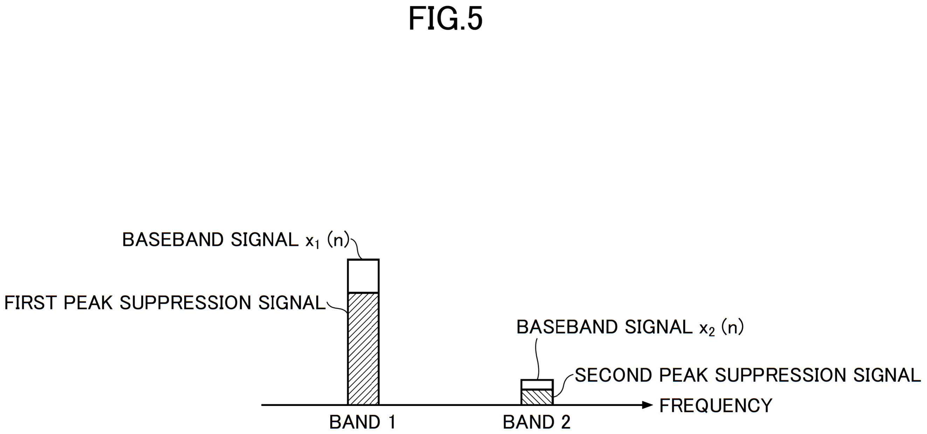

FIG. 5 is a diagram illustrating an example of a relationship between signal levels of the baseband signals x₁(n) and x₂(n) of the bands 1 and 2 and signal levels of the first peak suppression signal and the second peak suppression signal. The bands 1 and 2 are examples of a first band and a second band.

In FIG. 5, the baseband signals x₁(n) and x₂(n) are indicated in outlines, and the first peak suppression signal and the second peak suppression signals are indicated by hatchings. The baseband signal x₁(n) and the first peak suppression signal are illustrated in an overlapping manner, and the baseband signal x₂(n) and the second peak suppression signal are illustrated in an overlapping manner.

Because the signal levels of the baseband signals x₁(n) and x₂(n) vary instant by instant every time the time index n varies, the signal levels differ greatly in most cases as illustrated in FIG. 5. At a certain time index, the signal levels of the baseband signals x₁(n) and x₂(n) hardly become approximately the same.

The peak suppression device 100 calculates the first ratio {D1ₙ/(D1ₙ + D2ₙ)} and the second ratio {D2ₙ/(D1ₙ + D2ₙ)} at the timing when the peak is detected by the peak detector 120, using the first amplitude D1ₙ and the second amplitude D2ₙ of the baseband signals x₁(n) and x₂(n), respectively.

In addition, the first peak suppression signal and the second peak suppression signal are generated based on the first impulse response signal and the second impulse response signal, the first ratio {D1ₙ/(D1ₙ + D2ₙ)} and the second ratio {D2ₙ/(D1ₙ + D2ₙ)}, and the adjustment signals B1 and B2, respectively.

For this reason, the peak suppression device 100 can proactively suppress a peak component having a greater ratio (the first ratio or the second ratio) calculated by the ratio calculator 145, among components of the baseband signal xₒᵤₜ₁(n) and the baseband signal xₒᵤₜ₂(n) included in the composite transmission signal combined by the adder 23 illustrated in FIG. 1.

### <Peak Suppression by Peak Suppression Device of Comparative Example>

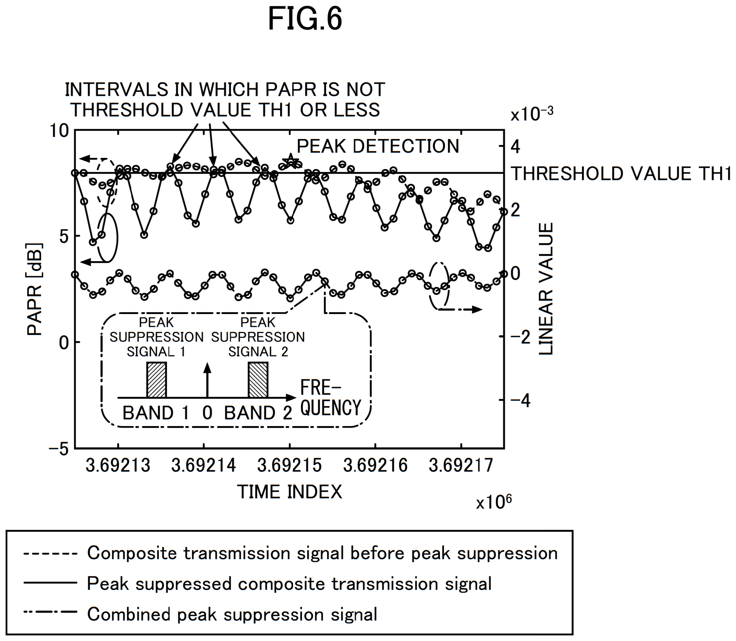

FIG. 6 is a diagram illustrating an example of a peak suppression by a peak suppression device of a comparative example. In FIG. 6, the abscissa represents the time (the time index), and the ordinate represents the signal level in peak-to-average power ratio (PAPR). In FIG. 6, the PAPR of the peak suppressed composite transmission signal is indicated by a solid line, the PAPR of the composite transmission signal before the peak suppression is indicated by a broken line, and a PAPR of the combined peak suppression signal obtained by combining peak suppression signals 1 and 2 for the bands 1 and 2 generated by the peak suppression device of the comparative example is indicated by a one-dot chain line. Further, TH1 denotes a threshold value of the PAPR of the peak suppressed composite transmission signal.

In this example, the PAPR of the peak suppressed composite transmission signal becomes the PAPR of a signal obtained by subtracting the peak suppressed composite signal from the composite signal before the peak suppression.

Unlike the peak suppression device 100 illustrated in FIG. 2, the peak suppression device of the comparative example does not include the ratio calculator 145 and does not calculate the first ratio {D1ₙ/(D1ₙ + D2ₙ)} and the second ratio {D2ₙ/(D1ₙ + D2ₙ)}.

For this reason, in the peak suppression device of the comparative example, as illustrated in the inside a callout in FIG. 6, the signal levels of the peak suppression signals 1 and 2 for the bands 1 and 2 are identical to each other. This is because the peak suppression signals 1 and 2 are common peak suppression signals.

Further, the bands 1 and 2 are not signals of two adjacent bands, but are two bands separated by two bands or three bands or more. The band difference between the band 1 and the band 2 is approximately 300 MHz, for example.

Accordingly, when the signal levels of the two peak suppression signals 1 and 2 having frequencies that differ to a certain extent are identical to each other, a waveform of a combined peak suppression signal obtained by combining the peak suppression signals 1 and 2 repeatedly increases and decreases at a cycle corresponding to the frequency difference between the bands 1 and 2, and includes a time interval during which the signal level becomes negative.

Hence, when the combined peak suppression signal that repeatedly increases and decreases at the cycle corresponding to the frequency difference between the bands 1 and 2 is subtracted from the composite transmission signal before the peak suppression, an interval in which the PAPR of the composite transmission signal suppressed of the peak does not become the threshold value TH1 or less may occur. In this case, it is not possible to suppress the peak of the composite transmission signal obtained by combining the baseband signals of the two bands 1 and 2 having frequencies that differ to a certain extent.

### <Peak Suppression in Peak Suppression Device 100>

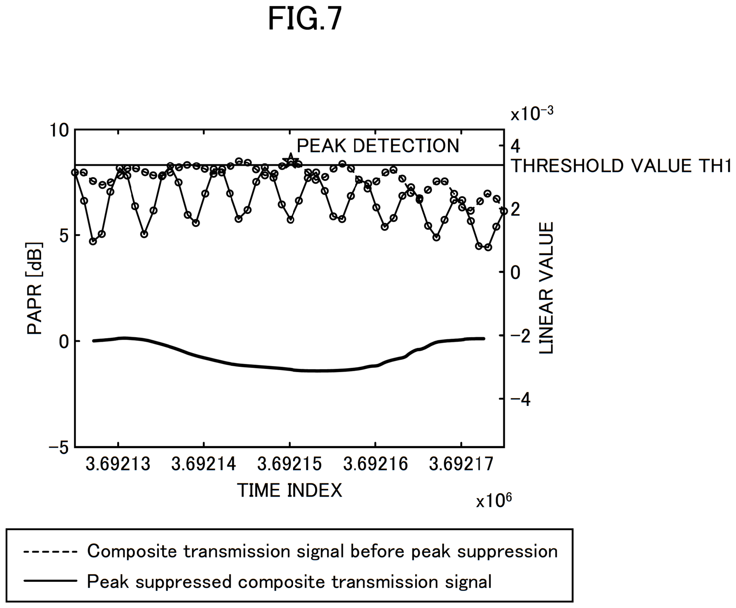

FIG. 7 is a diagram illustrating an example of the peak suppression by the peak suppression device 100. In FIG. 7, the abscissa represents the time (the time index), and the ordinate represents the signal level in peak-to-average power ratio (PAPR). In FIG. 7, the PAPR of the peak suppressed composite transmission signal is indicated by a solid line, the PAPR of the composite transmission signal before the peak suppression is indicated by a broken line, and a PAPR of the combined peak suppression signal obtained by combining the first peak suppression signal and the second peak suppression signal generated by the peak suppression device 100 is indicated by a one-dot chain line. Further, TH1 denotes a threshold value of the PAPR of the peak suppressed composite transmission signal.

In this example, the PAPR of the peak suppressed composite transmission signal is the PAPR of a signal obtained by subtracting the combined peak suppression signal from the composite transmission signal before the peak suppression.

The peak suppression device 100 includes a ratio calculator 145, and generates the first peak suppression signal and the second peak suppression signal that are different for the bands 1 and 2, using the first ratio {D1ₙ/(D1ₙ + D2ₙ)}, the second ratio {D2ₙ/(D1ₙ + D2ₙ)}, and the adjustment signals B1 and B2 for the bands 1 and 2.

As illustrated in FIG. 5, the signal levels of the first peak suppression signal and the second peak suppression signal correspond to the first amplitude D1ₙ and the second amplitude D2ₙ of the baseband signals x₁(n) and x₂(n). As illustrated in FIG. 5, in a case where the signal level of the baseband signal x₁(n) is clearly higher than the signal level of the baseband signal x₂(n), the signal levels of the first peak suppression signal and the second peak suppression signal greatly differ, and assumes a state equivalent to a state in which only the first peak suppression signal is present and the second peak suppression signal is not present.

The waveform of the combined peak suppression signal obtained by combining the first peak suppression signal and the second peak suppression signal as described above repeats a gradual increase and decrease at a long cycle corresponding to the frequency of the first peak suppression signal, as illustrated in FIG. 7.

When the combined peak suppression signal having the waveform that repeats the gradual increase and decrease at the long cycle is subtracted from the composite transmission signal before the peak suppression, the PAPR of the peak suppressed composite transmission signal becomes the threshold value TH1 or less, and it is possible to suppress the peak of the composite transmission signal.

As described above, according to the peak suppression device 100 of the embodiment, it is possible to proactively suppress a peak component having a greater ratio (the first ratio or the second ratio) calculated by the ratio calculator 145, among components of the baseband signals xₒᵤₜ₁(n) and xₒᵤₜ₂(n) included in the composite transmission signal (the multiband composite signal) combined by the adder 23 illustrated in FIG. 1.

For this reason, it is possible to provide the peak suppression device 100 capable of suppressing the peak of the multiband composite signal. In addition, in the case described above, the first band and the second band are two bands separated by two bands or three or more bands, for example. That is, the IBW of the first band and the second band is large in the case described above. However, the first band and the second band may be two adjacent bands, for example, and it is possible to perform the peak suppression of the multiband composite signal even in such a case.

### <Peak Suppression Devices 100M1 through 100M5 of First through Fifth Modifications of Embodiment>

Hereinafter, peak suppression devices 100M1 through 100M5 according to first through fifth modifications of the embodiment will be described. The constituent elements or components of the peak suppression devices 100M1 through 100M5 that are the same as those of the peak suppression device 100 of the embodiment described with reference to FIG. 1 through FIG. 7 are designated by the same reference numerals, and a redundant description thereof will be omitted.

### <First Modification>

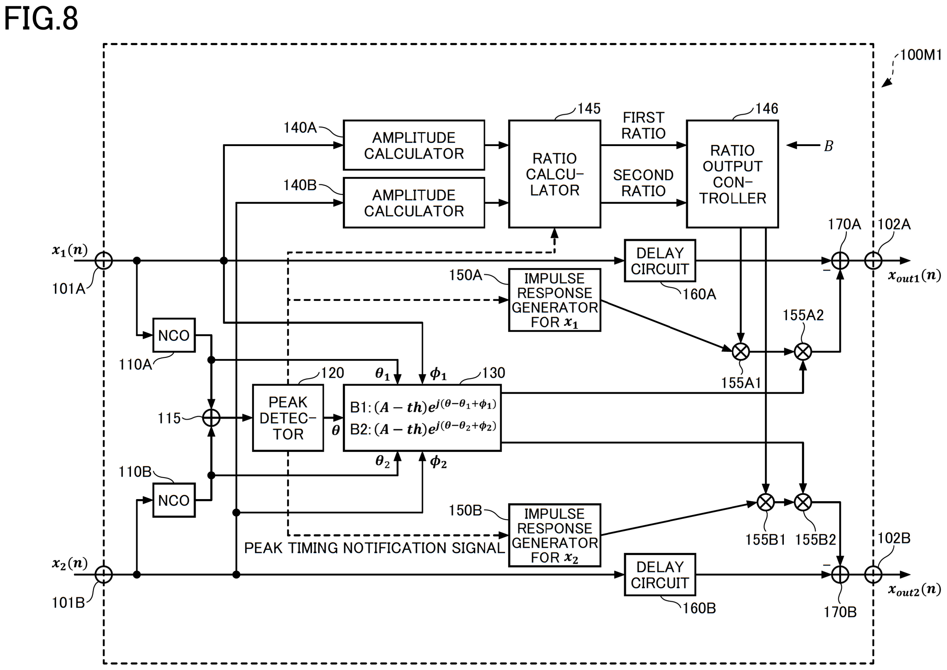

FIG. 8 is a diagram illustrating an example of a configuration of the peak suppression device 100M1 according to the first modification of the embodiment. The peak suppression device 100M 1 has a configuration in which a ratio output controller 146 is provided between the ratio calculator 145 and each of the multipliers 155A1 and 155B of the peak suppression device 100.

In a case where the first ratio {D1ₙ/(D1ₙ + D2ₙ)} or the second ratio {D2ₙ/(D1ₙ + D2ₙ)} calculated by the ratio calculator 145 is equal to or greater than a predetermined ratio B, the ratio output controller 146 outputs the first ratio {D1ₙ/(D1ₙ + D2ₙ)} and the second ratio {D2ₙ/(D1ₙ + D2ₙ)} to the multipliers 155A1 and 155B1, respectively. In addition, in a case where the first ratio {D1ₙ/(D1ₙ + D2ₙ)} or the second ratio {D2ₙ/(D1ₙ + D2ₙ)} calculated by the ratio calculator 145 is less than the predetermined ratio B, the ratio output controller 146 sets the first ratio {D1ₙ/(D1ₙ + D2ₙ)} and the second ratio {D2ₙ/(D1ₙ + D2ₙ)} to a preset ratio, and outputs the preset ratio to the multipliers 155A1 and 155B1, respectively. Setting the first ratio {D1ₙ/(D1ₙ + D2ₙ)} and the second ratio {D2ₙ/(D1ₙ + D2ₙ)} to the preset ratio means that the adjustment using the first ratio and the second ratio is not performed (there is no ratio adjustment). The predetermined ratio B is an example of a third ratio, and the preset ratio is an example of a fourth ratio.

### <Flow Chart>

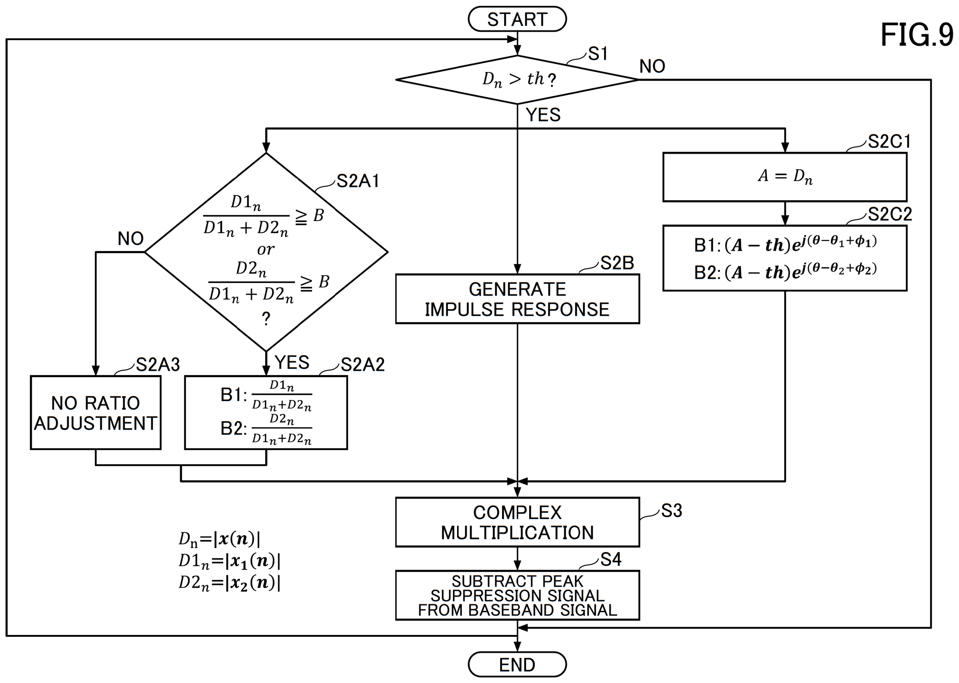

FIG. 9 is a flow chart illustrating an example of a procedure performed by the peak suppression device 100M1. The procedure illustrated in FIG. 9 includes processes of steps S2A1, S2A2, and S2A3 in place of the process of step S2A illustrated in FIG. 4.

The ratio calculator 145 calculates the first ratio {D1ₙ/(D1ₙ + D2ₙ)} and the second ratio {D2ₙ/(D1ₙ + D2ₙ)}, and determines whether or not the first ratio {D1ₙ/(D1ₙ + D2ₙ)} or the second ratio {D2ₙ/(D1ₙ + D2ₙ)} is equal to or greater than the predetermined ratio B (step S2A1).

When the ratio calculator 145 determines that at least one of the first ratio {D1ₙ/(D1ₙ + D2ₙ)} or the second ratio {D2ₙ/(D1ₙ + D2ₙ)} is equal to or greater than the predetermined ratio B (S2A1: YES), the ratio calculator 145 outputs the first ratio {D1ₙ/(D1ₙ + D2ₙ)} and the second ratio {D2ₙ/(D1ₙ + D2ₙ)} to the multipliers 155A1 and 155B1, respectively (step S2A2). As a result, the peak suppression device 100M1 can perform the peak suppression.

On the other hand, when the ratio calculator 145 determines that both the first ratio {D1ₙ/(D1ₙ + D2ₙ)} and the second ratio {D2ₙ/(D1ₙ + D2ₙ)} are less than the predetermined ratio B (S2A1: NO), the ratio calculator 145 sets the first ratio {D1ₙ/(D1ₙ + D2ₙ)} and the second ratio {D2ₙ/(D1ₙ + D2ₙ)} to the preset ratio, and outputs the preset ratio to the multipliers 155A1 and 155B1, respectively (step S2A3). In this case, because both the first ratio {D1ₙ/(D1ₙ + D2ₙ)} and the second ratio {D2ₙ/(D1ₙ + D2ₙ)} are set to the preset ratio, the peak suppression device 100M1 does not perform the ratio adjustment at the peak timing.

As described above, according to the peak suppression device 100M1, it is possible to proactively suppress a peak component having a greater ratio (the first ratio or the second ratio) calculated by the ratio calculator 145, among components of the baseband signals xₒᵤₜ₁(n) and xₒᵤₜ₂(n) included in the composite transmission signal (the multiband composite signal) combined by the adder 23 illustrated in FIG. 1, similar to the peak suppression device 100.

In addition, in the case where the first ratio {D1ₙ/(D1ₙ + D2ₙ)} and the second ratio {D2ₙ/(D1ₙ + D2ₙ)} are less than the predetermined ratio B, the peak suppression device 100M1 does not perform the ratio adjustment at the peak timing, and thus, it is possible to proactively suppress the peak component having the greater ratio calculated by the ratio calculator 145, efficiently and effectively.

### <Second Modification>

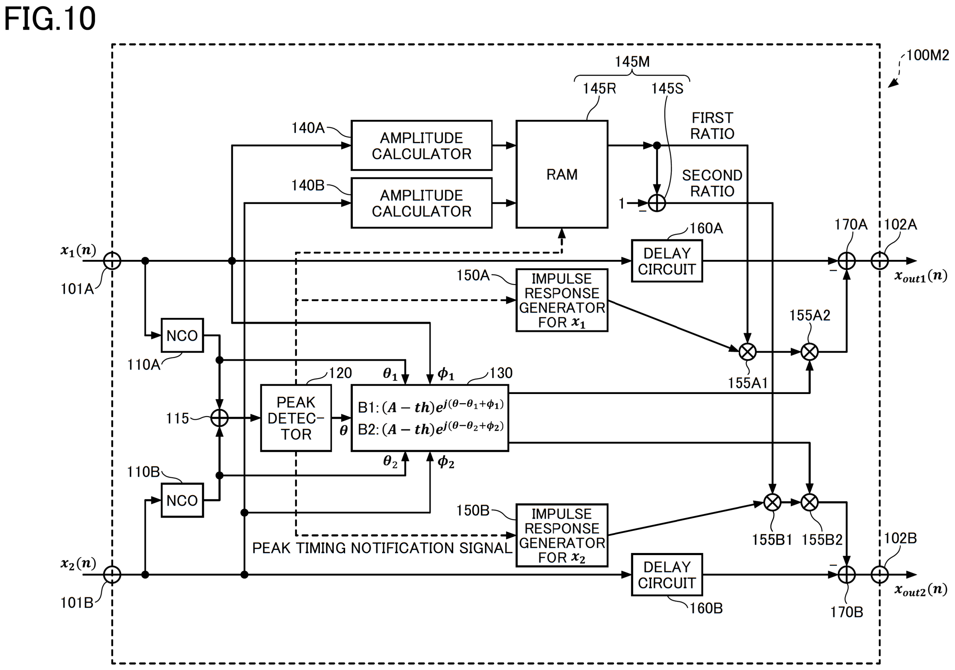

FIG. 10 is a diagram illustrating an example of a configuration of the peak suppression device 100M2 according to the second modification of the embodiment. The peak suppression device 100M2 has a configuration in which the ratio calculator 145 of the peak suppression device 100 is replaced with a ratio calculator 145M.

The ratio calculator 145M of the peak suppression device 100M2 includes a RAM 145R and a subtractor 145S. The RAM 145R is an example of a storage device. The subtractor 145S is an example of a subtraction device.

The first amplitude D1ₙ and the second amplitude D2ₙ of the baseband signals x₁(n) and x₂(n) are input to the RAM 145R from the amplitude calculators 140A and 140B, respectively.

An output terminal of the RAM 145R is connected to one input terminal of the multiplier 155A1 and to a positive input terminal of the subtractor 145S. A value "1" is input to a negative input terminal of the subtractor 145S. An output terminal of the subtractor 145S is connected to one input terminal of multiplier 155B1.

The RAM 145R stores ratio data associating the first amplitude D1ₙ, the second amplitude D2ₙ, and the first ratio {D1ₙ/(D1ₙ + D2ₙ)} of the first amplitude D1ₙ. The RAM 145R outputs the first ratio {D1ₙ/(D2ₙ + D1ₙ)} corresponding to the first amplitude D1ₙ and the second amplitude D2ₙ within the ratio data at the timing when the peak is detected by the peak detector 120.

The subtractor 145S calculates the second ratio {D2ₙ/(D1ₙ + D2ₙ)} by subtracting the first ratio {D1ₙ/(D1ₙ + D2ₙ)} output from the RAM 145R from the value "1", and outputs the second ratio {D2ₙ/(D1ₙ + D2ₙ)} to the multiplier 155B1.

For this reason, the peak suppression device 100M2 can operate in the same manner as the peak suppression device 100.

As described above, according to the peak suppression device 100M2, it is possible to proactively suppress a peak component having a greater ratio (the first ratio or the second ratio) calculated by the ratio calculator 145M, among components of the baseband signals xₒᵤₜ₁(n) and xₒᵤₜ₂(n) included in the composite transmission signal (the multiband composite signal) combined by the adder 23 illustrated in FIG. 1, similar to the peak suppression device 100.

Further, the peak suppression device 100 (an information processing apparatus) capable of suppressing the peak of the multiband composite signal can be provided with the configuration in which the ratio calculator 145 includes the RAM 145R storing the ratio data and the subtractor 145S. Because the ratio calculator 145 can be implemented by the RAM 145R and the subtractor 145S, the configuration can be simplified.

### <Third Modification>

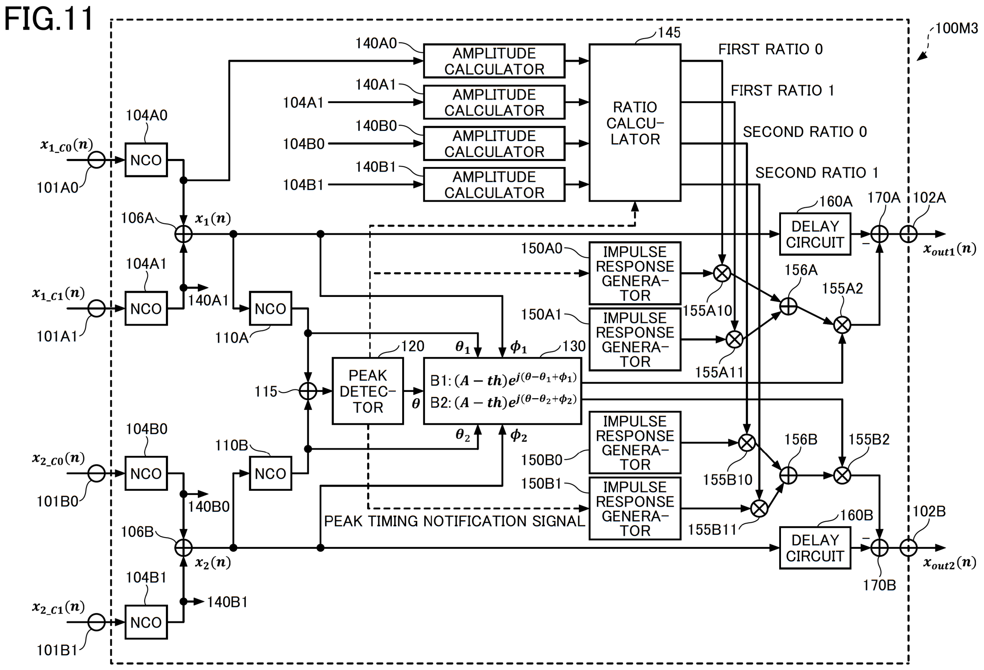

FIG. 11 is a diagram illustrating an example of a configuration of the peak suppression device 100M3 according to the third modification of the embodiment. The peak suppression device 100M3 has a configuration corresponding to a case where baseband signals of a plurality of frequency bands are present in each of the bands 1 and 2.

As an example, two baseband signals x_{1_c0}(n) and x_{1_c1}(n) are present in the band 1, and two baseband signals x_{2_c0}(n) and x_{2_c1}(n) are present in the band 2.

Differences in the configurations between the peak suppression device 100M3 and the peak suppression device 100 will be described.

The peak suppression device 100M3 has four input terminals 101A0, 101A1, 101B0, and 101B1 in place of the input terminals 101A and 101B of the peak suppression device 100. The baseband signals x_{1_c0}(n) and x_{1_c1}(n) are input to the input terminals 101A0 and 101A1, respectively, and the baseband signals x_{2_c0}(n) and x_{2_c1}(n) are input to the input terminals 101B0 and 101B1, respectively.

The peak suppression device 100M3 has a configuration in which NCOs 104A0, 104A1, 104B0, and104B1, and adders 106A and 106B are added with respect to the peak suppression device 100.

The input terminals 101A0 and 101A1 are connected to input terminals of the NCOs 104A0 and 104A1, respectively, and output terminals of the NCOs 104A0 and 104A1 are connected to the adder 106A. An output terminal of the adder 106A is connected to the NCO 110A and the delay circuit 160A. The NCOs 104A0 and the 104A1 are an example of a third frequency shifter. The adder 106A is an example of a second adder.

The input terminals 101B0 and 101B1 are connected to input terminals of the NCOs 104B0 and 104B1, respectively, and output terminals of the NCOs 104B0 and 104B1 are connected to the adder 106B. An output terminal of the adder 106B is connected to the NCO 110B and the delay circuit 160B. The NCOs 104B0 and the 104B1 are an example of a fourth frequency shifter. The adder 106B is an example of a third adder.

The peak suppression device 100M3 has a configuration in which the amplitude calculators 140A and 140B of the peak suppression device 100 are replaced with amplitude calculators 140A0, 140A1, 140B0, and 140B1, and the impulse response generators 150A and 150B of the peak suppression device 100 are replaced with impulse response generators 150A1, 150A1, 150B0, and 150B1.

The peak suppression device 100M3 has a configuration in which the multipliers 155A1 and 155B1 of the peak suppression device 100 are replaced with multipliers 155A10, 155A11, 155B10, and 155B11, and an adder 156A connected to output terminals of the multipliers 155A10 and 155A11 and an adder 156B connected to output terminals of the multipliers 155B10 and 155B11 are additionally provided. An output terminal of the adder 156A is connected to one input terminal of the multiplier 155A2, and an output terminal of the adder 156B is connected to one input terminal of the multiplier 155B2.

The amplitude calculators 140A0, 140A1, 140B0, and 140B1 calculate the amplitudes (a first amplitude D1ₙ₀, a first amplitude D1ₙ₁, a second amplitude D2ₙ₀, and a second amplitude D2ₙ₁) of the baseband signals x_{1_c0}(n), x_{1_c1}(n), x_{2_c0}(n), and x_{2_c1}(n) output from the NCOs 104A0, 104A1, 104B0, and 104B1, respectively.

The ratio calculator 145 calculates a ratio (a first ratio 0) of the first amplitude D1ₙ₀ with respect to the first amplitude D1ₙ₀, the first amplitude D1ₙ₁, the second amplitude D2ₙ₀, and the second amplitude D2ₙ₁, and a ratio (a first ratio 1) of the first amplitude D1ₙ₁ with respect to the first amplitude D1ₙ₀, the first amplitude D1ₙ₁, the second amplitude D2ₙ₀, and the second amplitude D2ₙ₁ at the timing when the peak is detected by the peak detector 120. That is, the first ratio 0 = D1ₙ₀/(D1ₙ₀ + D1ₙ₁ + D2ₙ₀ + D2ₙ₁), and the first ratio 1 = D1ₙ₁/(D1ₙ₀ + D1ₙ₁ + D2ₙ₀ + D2ₙ₁).

In addition, the ratio calculator 145 calculates a ratio (a second ratio 0) of the second amplitude D2ₙ₀ with respect to the first amplitude D1ₙ₀, the first amplitude D1ₙ₁, the second amplitude D2ₙ₀, and the second amplitude D2ₙ₁, and a ratio (a second ratio 1) of the second amplitude D2ₙ₁ with respect to the first amplitude D1ₙ₀, the first amplitude D1ₙ₁, the second amplitude D2ₙ₀, and the second amplitude D2ₙ₁ at the timing when the peak is detected by the peak detector 120. That is, the second ratio 0 = D2ₙ₀/(D1ₙ₀ + D1ₙ₁ + D2ₙ₀ + D2ₙ₁), and the second ratio 1 = D2ₙ₁/(D1ₙ₀ + D1ₙ₁ + D2ₙ₀ + D2ₙ₁).

The impulse response generators 150A0 and 150A1 output a first impulse response signal 0 and a first impulse response signal 1 to the multipliers 155A10 and 155A11, respectively. The impulse response generators 150B0 and 150B1 output a second impulse response signal 0 and a second impulse response signal 1 to the multipliers 155B10 and 155B11, respectively.

The multiplier 155A10 multiplies the first ratio 0 to the first impulse response signal 0, and outputs a multiplication result to the adder 156A. The multiplier 155A11 multiplies the first ratio 1 to the first impulse response signal 1, and outputs a multiplication result to the adder 156A. The multiplier 155B10 multiplies the second ratio 0 to the second impulse response signal 0, and outputs a multiplication result to the adder 156B. The multiplier 155B11 multiplies the second ratio 1 to the second impulse response signal 1, and outputs a multiplication result to the adder 156B.

The adder 156A combines the first impulse response signal 0 multiplied by the first ratio 0 and the first impulse response signal 1 multiplied by the first ratio 1, and outputs a combined signal to the multiplier 155A2. The adder 156B combines the second impulse response signal 0 multiplied by the second ratio 0 and the second impulse response signal 1 multiplied by the second ratio 1, and outputs a combined signal to the multiplier 155B2.

The multiplier 155A2 outputs a first peak suppression signal, obtained by multiplying the adjustment signal B1 to the output of the adder 156A, to a negative input terminal of the subtractor 170A. The multiplier 155B2 outputs a second peak suppression signal, obtained by multiplying the adjustment signal B2 to the output of the adder 156B, to a negative input terminal of the subtractor 170B.

The subtractors 170A and 170B output the baseband signals xₒᵤₜ₁(n) and xₒᵤₜ₂(n), respectively.

### <Flow Chart>

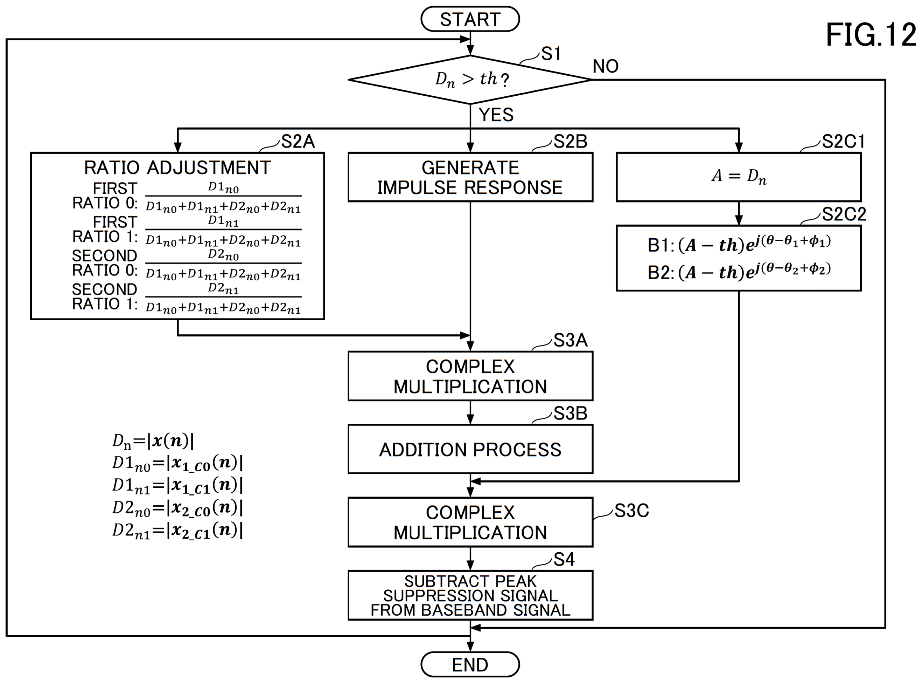

FIG. 12 is a flow chart illustrating an example of a procedure performed by the peak suppression device 100M3. The procedure illustrated in FIG. 12 includes a modified process of step S2A illustrated in FIG. 4, and includes the processes of steps S3A, S3B, and S3C in place of step S3.

The ratio calculator 145 calculates the first ratio 0, the first ratio 1, the second ratio 0, and the second ratio 1 at the timing when the peak is detected by the peak detector 120 (step S2A).

The multipliers 155A10, 155A11, 155B10, and 155B11 perform complex multiplication processes (step S3A). The multiplier 155A10 performs a complex multiplication of the first impulse response signal 0 with the first ratio 0, and outputs a multiplication result to the adder 156A. The multiplier 155A11 performs a complex multiplication of the first impulse response signal 1 with the first ratio 1, and outputs a multiplication result to the adder 156A. The multiplier 155B10 performs a complex multiplication of the second impulse response signal 0 with the second ratio 0, and outputs a multiplication result to the adder 156B. The multiplier 155B11 performs a complex multiplication of the second impulse response signal 1 with the second ratio 1, and outputs a multiplication result to the adder 156B.

The adders 156A and 156B perform addition processes (step S3B). The adder 156A combines the first impulse response signal 0 multiplied by the first ratio 0 and the first impulse response signal 1 multiplied by the first ratio 1, and outputs the combined signal to the multiplier 155A2. The adder 156B combines the second impulse response signal 0 multiplied by the second ratio 0 and the second impulse response signal 1 multiplied by the second ratio 1, and outputs the combined signal to the multiplier 155B2.

The multipliers 155A2 and 155B2 perform complex multiplication processes (step S3C). The multiplier 155A2 outputs the first peak suppression signal, obtained by multiplying the adjustment signal B1 to the output of the adder 156A, to the negative input terminal of the subtractor 170A. The multiplier 155B2 outputs the second peak suppression signal, obtained by multiplying the adjustment signal B2 to the output of the adder 156B, to the negative input terminal of the subtractor 170B.

Finally, the subtractors 170A and 170B perform subtraction processes (step S4), to output the baseband signals xₒᵤₜ₁(n) and xₒᵤₜ₂(n), respectively.

As described above, in a case where the bands 1 and 2 include baseband signals of a plurality of frequency bands, respectively, it is possible to proactively suppress a peak component of the baseband signal having a greater ratio (the first ratio 0, the first ratio 1, the second ratio 0, or the second ratio 1) calculated by the ratio calculator 145, among components of the baseband signal of the plurality of frequency bands of the band 1 and the baseband signal of the plurality of frequency bands of the band 2 included in the composite transmission signal.

### <Fourth Modification>

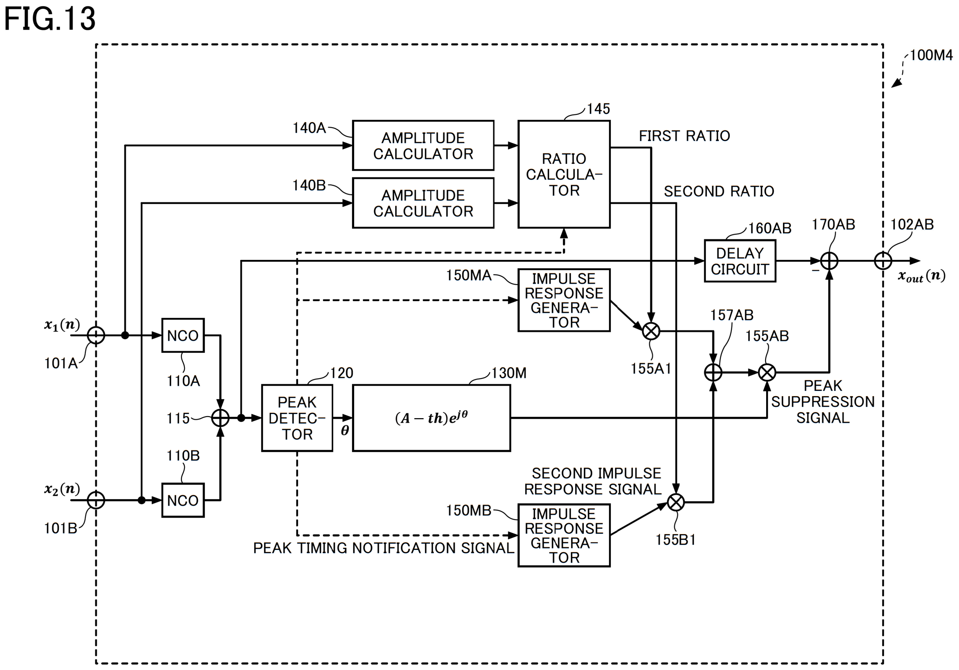

FIG. 13 is a diagram illustrating an example of a configuration of the peak suppression device 100M4 according to the fourth modification of the embodiment. The peak suppression device 100M4 differs from the peak suppression device 100 in that an adjustment signal generator 130M of the peak suppression device 100M4 generates a common adjustment signal for the bands 1 and 2, an impulse response generator 150MA outputs a first impulse response signal having a frequency shifted for the band 1, an impulse response generator 150MB outputs a second impulse response signal having a frequency shifted for the band 2. The peak suppression device 100M4 outputs one baseband signal xₒᵤₜ(n) obtained by combining the bands 1 and 2.

The peak suppression device 100M4 includes the adjustment signal generator 130M in place of the adjustment signal generator 130 of the peak suppression device 100, and includes an adder 157AB and a multiplier 155AB in place of the multipliers 155A2 and 155B2 of the peak suppression device 100. The multipliers 155A1 and 155B1 and the adder 157AB are an example of composite arithmetic circuitry.

The peak suppression device 100M4 includes impulse response generators 150MA and 150MB in place of the impulse response generators 150A and 150B of the peak suppression device 100. In addition, the peak suppression device 100M4 includes a single delay circuit 160AB in place of the delay circuits 160A and 160B of the peak suppression device 100, and includes a single subtractor 170AB in place of the subtractors 170A and 170B of the peak suppression device 100.

The delay circuit 160AB is provided between the adder 115 and the subtractor 170AB, and a composite signal obtained by combining the baseband signals x₁(n) and x₂(n) is input from the adder 115. The delay circuit 160AB delays the composite signal by a delay time equal to the time required for the composite signal to reach the subtractor 170AB via the peak detector 120, the adjustment signal generator 130, and the multiplier 155AB, and outputs the composite signal to a positive input terminal of the subtractor 170AB.

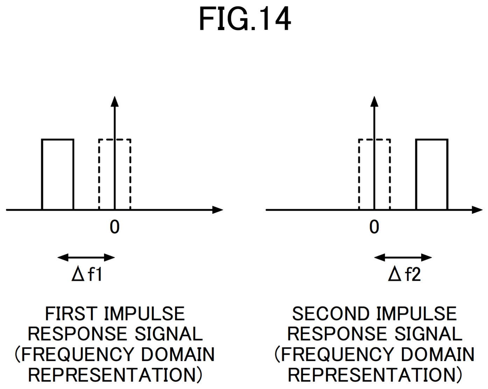

FIG. 14 is a diagram illustrating an example of the first impulse response signal and the second impulse response signal that are output by the impulse response generators 150MA and 150MB by shifting the frequencies for the bands 1 and 2. In FIG. 14, the first impulse response signal and the second impulse response signal output by the impulse response generators 150A and 150B of the peak suppression device 100 are indicated by broken lines, respectively, and the first impulse response signal and the second impulse response signal output by the impulse response generators 150MA and 150MB are indicated by solid lines, respectively.

As illustrated in FIG. 14, the impulse response generator 150MA outputs a first impulse response signal having a frequency lowered by Δf1 with respect to the first impulse response signal output by the impulse response generator 150A of the peak suppression device 100. The impulse response generator 150MB outputs a second impulse response signal having a frequency is increased by Δf2 with respect to the second impulse response signal output by the impulse response generator 150B of the peak suppression device 100. A sum of Δf1 and Δf2 corresponds to the frequency difference between the bands 1 and 2.

In the peak suppression device 100M4, when the peak detector 120 detects the peak of the composite signal, the adjustment signal generator 130M outputs an adjustment signal reflecting the amplitude A and the phase θ of the peak. An amplitude of the adjustment signal corresponds to a value (A - th) obtained by subtracting the threshold value th from the amplitude A of the peak of the composite signal. In addition, the phase of the adjustment signal corresponds to the phase θ of the peak of the composite signal.

The multiplier 155A1 multiplies the first ratio to the first impulse response signal, and the multiplier 155B1 multiplies the second ratio to the second impulse response signal. The first impulse response signal multiplied by the first ratio and the second impulse response signal multiplied by the second ratio are combined by the adder 157AB. The combined impulse response signal, combined by the adder 157AB, is multiplied by the adjustment signal by the multiplier 155AB, to generate a peak suppression signal.

The subtractor 170AB subtracts the peak suppression signal from the composite signal that is delayed by the delay circuit 160AB, and outputs a subtraction result as the baseband signal xₒᵤₜ(n).

For this reason, it is possible to proactively suppress a peak component having a greater ratio (the first ratio or the second ratio) calculated by the ratio calculator 145, among the components of the baseband signals xₒᵤₜ₁(n) and xₒᵤₜ₂(n) included in the composite transmission signal combined by the adder 23 illustrated in FIG. 1.

Further, the baseband signal xₒᵤₜ(n), obtained by subtracting the peak suppression signal generated by performing a complex multiplication of the combined impulse response signal and the adjustment signal from the composite signal, can be output from the output terminal 102AB.

In a case where the peak suppression device 100M4 is used, the digital circuitry 20 does not need to include the frequency shifters 22A and 22B and the adder 23, and the baseband signal xₒᵤₜ(n) may be output to the DAC 30.

### <Fifth Modification>

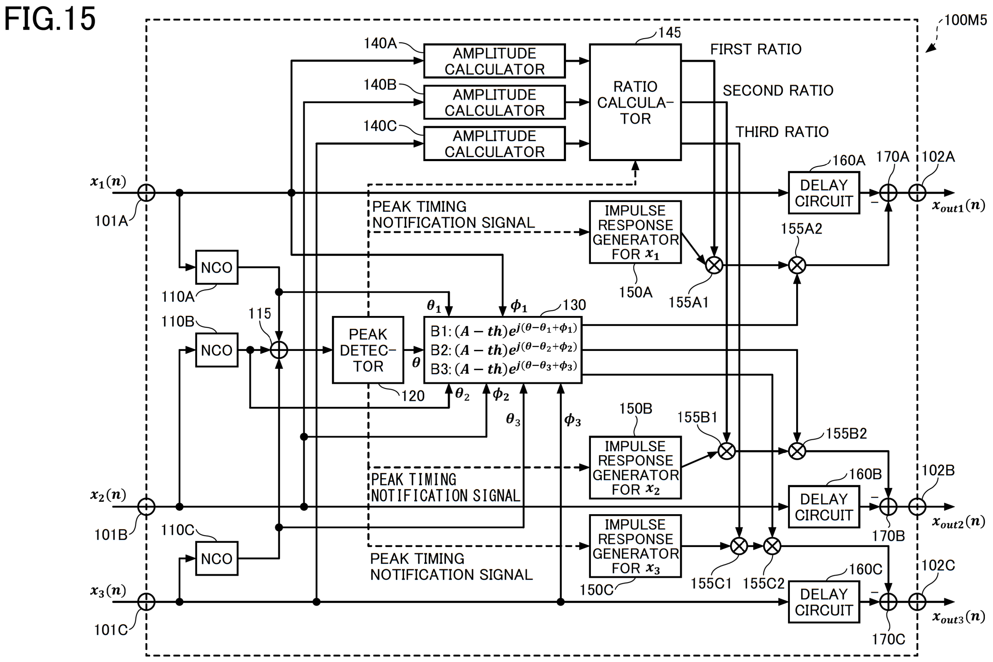

FIG. 15 is a diagram illustrating an example of a configuration of the peak suppression device 100M5 according to the fifth modification of the embodiment. The peak suppression device 100M5 can be obtained by modifying the configuration of the peak suppression device 100 designed to receive two baseband signals x₁(n) and x₂(n) into a configuration designed to receive three baseband signals x₁(n), x₂(n), and x₃(n).

The peak suppression device 100M5 has a configuration in which an input terminal 101C, an output terminal 102C, a NCO 110C, an amplitude calculator 140C, an impulse response generator 150C, multipliers 155C1 and 155C2, and a subtractor 170C are added to the configuration of the peak suppression device 100.

The baseband signal x₃(n) is input to the input terminal 101C. For example, the frequencies of the baseband signals x₁(n), x₂(n), and x₃(n) input to the input terminals 101A, 101B, and 101C, respectively, are identical, but the frequencies may be different from one another.

In the peak suppression device 100M5, the NCOs 110A, 110B, and 110C shift the frequencies of the baseband signals x₁(n), x₂(n), x₃(n) for bands 1, 2, and 3, respectively.

The adder 115 outputs a composite signal, obtained by combining the baseband signals x₁(n), x₂(n), and x₃(n) having the frequencies shifted by the NCOs 110A, 110B, and 110C, respectively, to the peak detector 120.

The adjustment signal generator 130 further receives the phase ϕ₃ of the baseband signal x₃(n) and the phase θ₃ of the baseband signal x₃(n) having the frequency shifted by the NCO 110C. The adjustment signal generator 130 generates and outputs adjustment signals B1, B2, and B3 to the multipliers 155A2, 155B2, and 155C2, respectively.

The amplitude calculator 140C calculates a third amplitude D3ₙ of the baseband signal x₃(n) input from the input terminal 101C, and outputs the third amplitude D3ₙ to the ratio calculator 145.

The ratio calculator 145 calculates, a first ratio {{D1ₙ/(D1ₙ + D2ₙ + D3ₙ)}} of the first amplitude D1ₙ with respect to the first amplitude D1ₙ, the second amplitude D2ₙ, and the third amplitude D3ₙ, a second ratio {{D2ₙ/(D1ₙ + D2ₙ + D3ₙ)}} of the second amplitude D2ₙ with respect to the first amplitude D1ₙ, the second amplitude D2ₙ, and the third amplitude D3ₙ, and a third ratio {{D3ₙ/(D1ₙ + D2ₙ + D3ₙ)}} of the third amplitude D3ₙ with respect to the first amplitude D1ₙ, the second amplitude D2ₙ, and the third amplitude D3ₙ, at the timing when the peak is detected by the peak detector 120.

When the peak timing notification signal is input from peak detector 120, impulse response generator 150C outputs a third impulse response signal to the multiplier 155C1, similar to the impulse response generators 150A and 150B that output the first impulse response signal and the second impulse response signal to the multipliers 155A1 and 155B1, respectively.

The multiplier 155C1 multiplies a third ratio to the third impulse response signal, and outputs a multiplication result to the multiplier 155C2. The multiplier 155C2 multiplies the adjustment signal B3 to the third impulse response signal multiplied by the third ratio, to generate the third peak suppression signal. The multiplier 155C2 outputs the third peak suppression signal to a negative input terminal of the subtractor 170C.

The subtractor 170C subtracts the third peak suppression signal from the baseband signal x₃(n) that is delayed by the delay circuit 160C, and outputs the baseband signal xₒᵤₜ₃(n) via the output terminal 102C. The output terminals 102A, 102B, and 102C are an example of output circuitry configured to output a multiband signal with the suppressed peak.

As described above, the peak suppression device 100M5 having the configuration for receiving the three baseband signals x₁(n), x₂(n), and x₃(n) can operate in a manner similar to the peak suppression device 100 having the configuration for receiving the two baseband signals x₁(n) and x₂(n). Further, the peak suppression device 100M5 can be operated in a similar same manner even when the configuration is modified to receive four or more baseband signals.

According to the fifth modification, it is possible to provide the peak suppression device 100M5 capable of suppressing the peak of the multiband composite signal.

### <Advantageous Features or Effects>

The peak suppression device (100) (information processing apparatus) according to one embodiment of the present disclosure includes:
a peak detector (120) configured to detect a peak of a signal based on a multiband signal in which a first baseband signal and a second baseband signal are combined;
a ratio adjuster (140A, 140B, 145, 150A, 150B, 155A1, 155A2, 155B1, 155B2) configured to adjust a ratio of a first peak suppression signal corresponding to the first baseband signal and a second peak suppression signal corresponding to the second baseband signal, according to amplitudes or power of the first baseband signal and the second baseband signal at a timing when the peak is detected by the peak detector (120);
peak suppression circuitry (170A, 170B) configured to suppress the peak of the multiband signal using the first peak suppression signal and the second peak suppression signal having the adjusted ratio; and
output circuitry (102A, 102B, 102C) configured to output the multiband signal with the suppressed peak.

In this case, among the components of the baseband signals xₒᵤₜ₁(n) and xₒᵤₜ₂(n) included in the composite transmission signal combined by the adder 23 illustrated in FIG. 1, the peak component having a greater ratio (the first ratio or the second ratio) calculated by the ratio calculator 145 can be proactively suppressed.

Accordingly, it is possible to provide the peak suppression device 100 (information processing apparatus) capable of suppressing the peak of the multiband composite signal. In addition, the peak of the transmission signal can be reduced, and a power consumption of the transmission amplifier (PA 43) can be reduced. Moreover, by adjusting a gain of the impulse response for every band with the first ratio and the second ratio calculated by the ratio calculator 145 based on an instantaneous amplitude of each band, it is possible to improve the degree of PAPR reduction while satisfying the signal quality (EVM) prescribed by the third generation partnership project (3GPP, registered trademark).

Further, the multiband signal with the suppressed peak may be a signal obtained by combining a signal having a first frequency corresponding to the first baseband signal and a signal having a second frequency corresponding to the second baseband signal.

Among the components of the baseband signals xₒᵤₜ₁(n) and xₒᵤₜ₂(n) of the signal obtained by combining the signal having the first frequency corresponding to the first baseband signal and the signal having the second frequency corresponding to the second baseband signal, the peak component having a greater ratio (the first ratio or the second ratio) calculated by the ratio calculator 145 can be proactively suppressed.

The peak suppression device (100) (information processing apparatus) may further include a peak suppression signal generator (155A1, 155A2, 155B1, 155B2) configured to generate a peak suppression signal corresponding to the peak of the multiband signal.

The peak suppression signal generator (155A1, 155A2, 155B1, 155B2) can proactively suppress the peak components having a greater ratio (the first ratio or the second ratio) calculated by the ratio calculator 145.

The peak suppression device (100) (information processing apparatus) may further include:
a first frequency shifter (110A) configured to shift a frequency of the first baseband signal to a frequency for a first band;
a second frequency shifter (110B) configured to shift a frequency of the second baseband signal to a frequency for a second band; and
a first adder (115) configured to generate a composite signal by combining an output of the first frequency shifter (110A) and an output of the second frequency shifter (110B), wherein:
   the signal based on the multiband signal is the composite signal, and
   the peak detector (120) detects a peak of the amplitude of the composite signal.

By detecting the peak of the composite signal obtained by combining the output of the first frequency shifter (110A) that shifts the frequency of the first baseband signal to the frequency for the first band and the output of the second frequency shifter (110B) that shifts the frequency of the second baseband signal to the frequency for the second band, it is possible to proactively suppress the peak components having a greater ratio (the first ratio or the second ratio) calculated by the ratio calculator 145.

The ratio adjuster (140A, 140B, 145, 150A, 150B, 155A1, 155A2, 155B1, 155B2) may include:
a first impulse response generator (150A) configured to generate a first impulse response signal corresponding to a signal having a first frequency at a timing when a peak is detected by the peak detector (120);
a second impulse response generator (150B) configured to generate a second impulse response signal corresponding to a signal having a second frequency at the timing when the peak is detected by the peak detector (120);
a first amplitude calculator (140A) configured to determine a first amplitude of the signal having the first frequency;
a second amplitude calculator (140B) configured to determine a second amplitude of the signal having the second frequency;
a ratio derivation circuit (145) configured to determine a first ratio of the first amplitude with respect to the first amplitude and the second amplitude and a second ratio of the second amplitude to the first amplitude and the second amplitude at a timing when a peak of the multiband signal is detected by the peak detector (120);
an adjustment signal generator (130) configured to generate an adjustment signal for adjusting an amplitude and a phase of the first impulse response signal and an amplitude and a phase of the second impulse response signal according to a phase θ of the multiband signal, a phase θ₁ of the signal having the first frequency, a phase θ₂ of the signal having the second frequency, a phase ϕ₁ of the first baseband signal, a phase ϕ₂ of the second baseband signal, and an amplitude value of the peak of the multiband signal at the timing when the peak is detected by the peak detector (120);
a first multiplier (155A1, 155A2) configured to generate a first peak suppression signal by performing a complex multiplication of the first impulse response signal, the first ratio, and the adjustment signal; and
a second multiplier (155B1, 155B2) configured to generate a second peak suppression signal by performing a complex multiplication of the second impulse response signal, the second ratio, and the adjustment signal.

By using the ratio adjuster (140A, 140B, 145, 150A, 150B, 155A1, 155A2, 155B1, 155B2) having such a configuration, it is possible to detect the peak of the complex signal obtained by combining the output of the first frequency shifter (110A) that shifts the frequency of the first baseband signal to the frequency for the first band and the output of the second frequency shifter (110B) that shifts the frequency of the second baseband signal to the frequency for the second band, and it is possible to proactively suppress the peak components having a greater ratio (the first ratio or the second ratio) calculated by the ratio calculator 145.

Further, the peak suppression circuitry (170A, 170B) may include:
a first subtractor (170A) configured to subtract the first peak suppression signal from the signal having the first frequency; and
a second subtractor (170B) configured to subtract the second peak suppression signal from the signal having the second frequency.

By subtracting the first peak suppression signal from the signal having the first frequency and subtracting the second peak suppression signal from the signal having the second frequency, it is possible to proactively suppress the peak component having a greater ratio (the first ratio or the second ratio) calculated by the ratio calculator 145.

The adjustment signal generator (130) may generate, as the adjustment signal, the first adjustment signal and the second adjustment signal for adjusting the amplitudes and phases of the first impulse response signal and the second impulse response signal, respectively, according to the phase θ of the multiband signal, the phase θ₁ of the signal having the first frequency, the phase θ₂ of the signal having the second frequency, the phase ϕ₁ of the first baseband signal, the phase ϕ₂ of the second baseband signal, and the amplitude value of the peak of the multiband signal at the timing when the peak is detected by the peak detector 120. In addition, the first multiplier (155A1, 155A2) may generate the first peak suppression signal by performing a complex multiplication of the first impulse response signal, the first ratio, and the first adjustment signal, and the second multiplier (155B1, 155B2) may generate the second peak suppression signal by performing a complex multiplication of the second impulse response signal, the second ratio, and the second adjustment signal.

In this case, by adjusting the amplitudes and phases of the first impulse response signal and the second impulse response signal using the first adjustment signal B1 and the second adjustment signal B2, respectively, it is possible to proactively suppress the peak component having a greater ratio calculated by the ratio calculator 145, among the components of the baseband signals xₒᵤₜ₁(n) and xₒᵤₜ₂(n) included in the complex transmission signal. In addition, the peak of the complex transmission signal can be reduced more effectively, and the power consumption of the transmission amplifier (PA 43) can further be reduced.

The adjustment signal generator (130) may generate a first adjustment signal having an amplitude obtained by subtracting a threshold value from the amplitude value of the peak and a phase (θ - θ₁ + ϕ₁) obtained by subtracting a difference between the phase θ₁ and the phase ϕ₁ from the phase θ, and a second adjustment signal having an amplitude obtained by subtracting the threshold value from the amplitude value of the peak and a phase (θ - θ₂ + ϕ₂) obtained by subtracting a difference between the phase θ₂ and the phase ϕ₂ from the phase θ.

The amplitudes and phases of the first impulse response signal and the second impulse response signal may be adjusted using the first adjustment signal B1 having the amplitude (A - th) and the phase (θ - θ₁ + ϕ₁) and the second adjustment signal B2 having the amplitude (A - th) and the phase (θ - θ₂ + ϕ₂). For this reason, it is possible to more accurately and proactively suppress the peak component having a greater ratio calculated by the ratio calculator 145 among the components of the baseband signals xₒᵤₜ₁(n) and xₒᵤₜ₂(n) included in the composite transmission signal. In addition, the peak of the composite transmission signal can be more accurately reduced, and the power consumption of the transmission amplifier (PA 43) can further be reduced.

A ratio output controller (146) may be provided between the ratio derivation circuit (145) and each of the first multiplier (155A1, 155A2) and the second multiplier (155B1, 155B2). The ratio output controller (146) may be configured to output the first ratio and the second ratio to the corresponding first multiplier (155A1, 155A2) and the second multiplier (155B1, 155B2), respectively, in a case where the first ratio or the second ratio is equal to or greater than a third ratio, and set the first ratio and the second ratio to a fourth ratio and output the fourth ratio to the corresponding first multiplier (155A1, 155A2) and the second multiplier (155B1, 155B2) in a case where the first ratio and the second ratio are less than the third ratio.

In a case where the first ratio {D1ₙ/(D1ₙ + D2ₙ)} and the second ratio {D2ₙ/(D1ₙ + D2ₙ)} are less than the predetermined ratio B, the peak suppression is not performed, and thus, it is possible to proactively suppress the peak component having a greater ratio calculated by the ratio calculator 145, efficiently and effectively. In addition, the peak of the transmission signal can further be reduced, and the power consumption of the transmission amplifier (PA 43) can further be reduced.

On the other hand, the ratio derivation circuit (145) may include:
a storage device (145R) configured to stores data in which the first amplitude and the second amplitude are associated with the first ratio of the first amplitude, and output the first ratio corresponding to the first amplitude and the second amplitude in the data at the timing when the peak is detected by the peak detector (120); and
a subtractor (145S) configured to determine the second ratio by subtracting the first ratio output from the storage device (145R) from a value "1".

In the configuration in which the ratio calculator 145 includes the RAM 145R and the subtractor 145S, it is also possible to provide the peak suppression device 100 (information processor) capable of suppressing the peak even when the IBW of the multiband composite signal is large. Further, the configuration can be simplified because the ratio calculator 145 can be implemented by the RAM 145R and the subtractor 145S.

The peak suppression device 100 (information processor) may further include:
a plurality of third frequency shifters (104A0, 104A1) configured to shift the frequency of the first baseband signal to frequencies for a plurality of frequency bands of the first band;
a plurality of fourth frequency shifters (104B0, 104B1) configured to shift the frequency of the second baseband signal to frequencies for a plurality of frequency bands of the second band;
a second adder (106A) configured to adds a plurality of outputs of the plurality of third frequency shifters and output a result to the first frequency shifter (110A); and
a third adder (106B) configured to adds a plurality of outputs of the plurality of fourth frequency shifters and output a result to the second frequency shifter (110B), wherein
a plurality of first amplitude calculators (140A) is provided in correspondence with the plurality of frequency bands of the first band, and determines a plurality of first amplitudes of signals in the plurality of frequency bands of the first baseband signal,
a plurality of second amplitude calculators (140B) is provided in correspondence with the plurality of frequency bands of the second band, and determines a plurality of second amplitudes of signals in the plurality of frequency bands of the second baseband signal,
the ratio derivation circuit (145) determines a plurality of first ratios of the plurality of first amplitudes with respect to the plurality of first amplitudes and the plurality of second amplitudes, and a plurality of second ratios of the plurality of second amplitudes with respect to the plurality of first amplitudes and the plurality of second amplitudes at the timing when the peak is detected by the peak detector (120),
a plurality of first impulse response generators (150A) is provided in correspondence with the plurality of frequency bands of the first band,
a plurality of second impulse response generators (150B) is provided in correspondence with the plurality of frequency bands of the second band;
the first multiplier (155A1, 155A2) generates a first peak suppression signal by performing a complex multiplication of a plurality of first impulse response signals generated by the plurality of first impulse response generators (150A), the plurality of first ratios, and the adjustment signal, and
the second multiplier (155B1, 155B2) generates a second peak suppression signal by performing a complex multiplication of a plurality of second impulse response signals generated by the plurality of first impulse response generators (150A), the plurality of second ratios, and the adjustment signal.

In a case where each of the first band and the second band includes a baseband signal of a plurality of frequency bands, it is possible to proactively suppress the peak component of the baseband signal having a greater ratio (the first ratio 0, the first ratio 1, the second ratio 0, or the second ratio 1) calculated by the ratio calculator 145, among the components of the baseband signal of the plurality of frequency bands of the first band and the baseband signal of the plurality of frequency bands of the second band included in the composite transmission signal, even when the IBW of the multiband composite signal is large.

Hence, it is possible to provide the peak suppression device 100 (information processing apparatus) capable of suppressing the peak, even when the IBW of the multiband composite signal is large and each of the first band and the second band has the baseband signal of a plurality of frequency bands. Further, the peak of the transmission signal can be reduced, and the power consumption of the transmission amplifier (PA 43) can be reduced.

Moreover, the ratio adjuster (140A, 140B, 145, 150A, 150B, 155A1, 155A2, 155B1, 155B2) may include:
a first impulse response generator (150A) configured to generate a first impulse response signal corresponding to the signal having the first frequency at the timing when the peak is detected by the peak detector (120);
a second impulse response generator (150B) configured to generate a second impulse response signal corresponding to the signal having the second frequency at the timing when the peak is detected by the peak detector (120);
a first amplitude calculator (140A) configured to determine a first amplitude of the signal having the first frequency;
a second amplitude calculator (140B) configured to determine the second amplitude of the signal having the second frequency;
a ratio derivation circuit (145) configured to determine the first ratio of the first amplitude with respect to the first amplitude and the second amplitude and the second ratio of the second amplitude with respect to the first amplitude and the second amplitude at the timing when the peak of the multiband signal is detected by the peak detector (120);
an adjustment signal generator (130) configured to generate an adjustment signal for adjusting the amplitude and phase of the first impulse response signal and the amplitude and phase of the second impulse response signal according to the phase θ of the multiband signal and the amplitude value of the peak of the multiband signal at the timing when the peak is detected by the peak detector (120);
composite arithmetic circuitry (155A1, 155B1, 157AB) configured to generate a combined impulse response signal by combining the first impulse response signal multiplied by the first ratio and the second impulse response signal multiplied by the second impulse response signal by the second ratio;
a multiplier (155AB) configured to generate a peak suppression signal by performing a complex multiplication of the combined impulse response signal and the adjustment signal; and
a subtractor (170AB) configured to subtract the peak suppression signal from the composite signal.

In this case, even when the IBW of the multiband composite signal is large, it is possible to proactively suppress the peak component having a greater ratio (the first ratio or the second ratio) calculated by the ratio calculator 145 among the peak components of the baseband signals xₒᵤₜ₁(n) and xₒᵤₜ₂(n) included in the composite transmission signal combined by the adder 23 illustrated in FIG. 1.

Accordingly, it is possible to provide the peak suppression device 100 (information processing apparatus) capable of suppressing the peak even when the IBW of the multiband composite signal is large. In addition, it is possible to output the baseband signal xₒᵤₜ(n) by subtracting the peak suppression signal, generated by performing the complex multiplication of the combined impulse response signal and the adjustment signal, from the composite signal. Moreover, the peak of the transmission signal can be reduced, and the power consumption of the transmission amplifier (PA 43) can be reduced. Further, by adjusting the gain of the impulse response for every band with the first ratio and the second ratio calculated by the ratio calculator 145 based on instantaneous amplitudes of the respective bands, it is possible to improve the degree of PAPR reduction while satisfying the signal quality (EVM) prescribed by the 3GPP (registered trademark).

A RU 10 (communication device) according to one embodiment of the present disclosure includes:
a transmission signal generator (21) configured to generate a first baseband signal for a first band and a second baseband signal for a second band;
an information processing apparatus (100) configured to receive the first baseband signal and the second baseband signal;
an adder (23) configured to generate a multiband signal by combining the first baseband signal and the second baseband signal having peaks suppressed by the information processing apparatus (100);
a transmission circuit (40) configured to up-convert and amplify the multiband signal; and
a communication device (10), wherein:
   the information processing apparatus (100) includes:
   a peak detector (120) configured to detects a peak of a signal based on the multiband signal in which the first baseband signal and the second baseband signal are combined;
   a ratio adjuster (140A, 140B, 145, 150A, 150B, 155A1, 155A2, 155B1, 155B2) configured to adjust a ratio of a first peak suppression signal corresponding to the first baseband signal and a second peak suppression signal corresponding to the second baseband signal, according to amplitudes or power of the first baseband signal and the second baseband signal at a timing when the peak is detected;
   peak suppression circuitry (170A, 170B) configured to suppress a peak of the multiband signal, using the first peak suppression signal and the second peak suppression signal having the adjusted ratio; and
   output circuitry (102A, 102B, 102C) configured to output the multiband signal with the suppressed peak.

In this case, it is possible to proactively suppress the peak component having a greater ratio (the first ratio or the second ratio) calculated by the ratio calculator 145, among the components of the baseband signals xₒᵤₜ₁(n) and xₒᵤₜ₂(n) included in the composite transmission signal combined by the adder 23 illustrated in FIG. 1.

Accordingly, it is possible to provide the RU 10 (communication device) capable of suppressing the peak of the multiband composite signal. In addition, the peak of the transmission signal can be reduced, and the power consumption of the transmission amplifier (PA 43) can be reduced. Moreover, by adjusting the gain of the impulse response for every band with the first ratio and the second ratio calculated by the ratio calculator 145 based on the instantaneous amplitudes of the respective bands, it is possible to improve the degree of PAPR reduction while satisfying the signal quality (EVM) prescribed by the 3GPP (registered trademark).

A peak suppression method (information processing method) according to one embodiment of the present disclosure is implemented in an information processing apparatus (100) including a first input terminal (101A) configured to receive a first baseband signal, and a second input terminal (101B) configured to receive a second baseband signal, and the peak suppression method (information processing method) includes:
detecting a peak of a signal based on a multiband signal in which the first baseband signal and the second baseband signal are combined;
adjusting a ratio of a first peak suppression signal corresponding to the first baseband signal and a second peak suppression signal corresponding to the second baseband signal, according to amplitudes or power of the first baseband signal and the second baseband signal at a timing when the peak is detected;
suppressing the peak of the multiband signal using the first peak suppression signal and the second peak suppression signal having the adjusted ratio; and
outputting the multiband signal with the suppressed peak.

In this case, it is possible to proactively suppress the peak component having a greater ratio (the first ratio or the second ratio) calculated by the ratio calculator 145, among the components of the baseband signals xₒᵤₜ₁(n) and xₒᵤₜ₂(n) included in the composite transmission signal combined by the adder 23 illustrated in FIG. 1.

Accordingly, it is possible to provide the peak suppression method (information processing method) capable of suppressing the peak of the multiband composite signal. In addition, the peak of the transmission signal can be reduced, and the power consumption of the transmission amplifier (PA 43) can be reduced. Moreover, by adjusting the gain of the impulse response for every band with the first ratio and the second ratio calculated by the ratio calculator 145 based on the instantaneous amplitudes of the respective bands, it is possible to improve the degree of PAPR reduction while satisfying the signal quality (EVM) prescribed by the 3GPP (registered trademark).

According to the disclosed technique, it is possible to provide an information processing apparatus, a communication device, and an information processing method capable of performing a peak suppression of a multiband composite signal.

Although the embodiments are numbered with, for example, "first," or "second," and the modifications of the first embodiment are numbered with, for example, "first," "second," "third," "fourth," or "fifth," the ordinal numbers do not imply priorities of the embodiments or modifications. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. An information processing apparatus (100) comprising:
a peak detector (120) configured to detect a peak of a signal based on a multiband signal in which a first baseband signal and a second baseband signal are combined;
a ratio adjuster (140A, 140B, 145, 150A, 150B, 155A1, 155A2, 155B1, 155B2) configured to adjust a ratio of a first peak suppression signal corresponding to the first baseband signal and a second peak suppression signal corresponding to the second baseband signal, according to amplitudes or power of the first baseband signal and the second baseband signal at a timing when the peak is detected by the peak detector;
peak suppression circuitry (170A, 170B) configured to suppress the peak of the multiband signal using the first peak suppression signal and the second peak suppression signal having the adjusted ratio; and
output circuitry (102A, 102B, 102C) configured to output the multiband signal with the suppressed peak.

2. The information processing apparatus (100) as claimed in claim 1, wherein the multiband signal with the suppressed peak is a signal obtained by combining a signal having a first frequency corresponding to the first baseband signal and a signal having a second frequency corresponding to the second baseband signal.

3. The information processing apparatus (100) as claimed in claim 1, further comprising:
a peak suppression signal generator (155A1, 155A2, 155B1, 155B2) configured to generate a peak suppression signal corresponding to the peak of the multiband signal.

4. The information processing apparatus (100) as claimed in claim 2, further comprising:
a first frequency shifter (110A) configured to shift a frequency of the first baseband signal to a frequency for a first band;
a second frequency shifter (110B) configured to shift a frequency of the second baseband signal to a frequency for a second band; and
a first adder (115) configured to generate a composite signal by combining an output of the first frequency shifter and an output of the second frequency shifter, wherein:
the signal based on the multiband signal is the composite signal, and
the peak detector (120) detects a peak of the amplitude of the composite signal.

5. The information processing apparatus (100) as claimed in claim 4, wherein:
the ratio adjuster (140A, 140B, 145, 150A, 150B, 155A1, 155A2, 155B1, 155B2) includes:
a first impulse response generator (150A) configured to generate a first impulse response signal corresponding to a signal having a first frequency at a timing when a peak is detected by the peak detector (120);
a second impulse response generator (150B) configured to generate a second impulse response signal corresponding to a signal having a second frequency at the timing when the peak is detected by the peak detector (120);
a first amplitude calculator (140A) configured to determine a first amplitude of the signal having the first frequency;
a second amplitude calculator (140B) configured to determine a second amplitude of the signal having the second frequency;
a ratio derivation circuit (145) configured to determine a first ratio of the first amplitude with respect to the first amplitude and the second amplitude and a second ratio of the second amplitude to the first amplitude and the second amplitude at a timing when a peak of the multiband signal is detected by the peak detector (120);
an adjustment signal generator (130) configured to generate an adjustment signal for adjusting an amplitude and a phase of the first impulse response signal and an amplitude and a phase of the second impulse response signal according to a phase θ of the multiband signal, a phase θ₁ of the signal having the first frequency, a phase θ₂ of the signal having the second frequency, a phase ϕ₁ of the first baseband signal, a phase ϕ₂ of the second baseband signal, and an amplitude value of the peak of the multiband signal at the timing when the peak is detected by the peak detector (120);
a first multiplier (155A1, 155A2 configured to generate a first peak suppression signal by performing a complex multiplication of the first impulse response signal, the first ratio, and the adjustment signal; and
a second multiplier (155B1, 155B2) configured to generate a second peak suppression signal by performing a complex multiplication of the second impulse response signal, the second ratio, and the adjustment signal.

6. The information processing apparatus (100) as claimed in claim 5, wherein the peak suppression circuitry (170A, 170B) includes:
a first subtractor (170A) configured to subtract the first peak suppression signal from the signal having the first frequency; and
a second subtractor (170B) configured to subtract the second peak suppression signal from the signal having the second frequency.

7. The information processing apparatus (100) as claimed in claim 5, wherein:
the adjustment signal generator (130) generates, as the adjustment signal, the first adjustment signal and the second adjustment signal for adjusting the amplitudes and phases of the first impulse response signal and the second impulse response signal, respectively, according to the phase θ of the multiband signal, the phase θ₁ of the signal having the first frequency, the phase θ₂ of the signal having the second frequency, the phase ϕ₁ of the first baseband signal, the phase ϕ₂ of the second baseband signal, and the amplitude value of the peak of the multiband signal at the timing when the peak is detected by the peak detector (120),
the first multiplier (155A1, 155A2) generates the first peak suppression signal by performing a complex multiplication of the first impulse response signal, the first ratio, and the first adjustment signal, and
the second multiplier (155B1, 155B2) generates the second peak suppression signal by performing a complex multiplication of the second impulse response signal, the second ratio, and the second adjustment signal.

8. The information processing apparatus (100) as claimed in claim 7, wherein the adjustment signal generator (130) generates a first adjustment signal having an amplitude obtained by subtracting a threshold value from the amplitude value of the peak and a phase (θ - θ₁ + ϕ₁) obtained by subtracting a difference between the phase θ₁ and the phase ϕ₁ from the phase θ, and a second adjustment signal having an amplitude obtained by subtracting the threshold value from the amplitude value of the peak and a phase (θ - θ₂ + ϕ₂) obtained by subtracting a difference between the phase θ₂ and the phase ϕ₂ from the phase θ.

9. The information processing apparatus (100) as claimed in claim 5, further comprising:
a ratio output controller (146) provided between the ratio derivation circuit (145) and each of the first multiplier (155A1, 155A2) and the second multiplier (155B1, 155B2),
wherein the ratio output controller (146) is configured to output the first ratio and the second ratio to the corresponding first multiplier and second multiplier, respectively, in a case where the first ratio or the second ratio is equal to or greater than a third ratio, and set the first ratio and the second ratio to a fourth ratio and output the fourth ratio to the corresponding first multiplier and the second multiplier in a case where the first ratio and the second ratio are less than the third ratio.

10. The information processing apparatus (100) as claimed in claim 5, wherein the ratio derivation circuit (145) includes:
a storage device (145R) configured to stores data in which the first amplitude and the second amplitude are associated with the first ratio of the first amplitude, and output the first ratio corresponding to the first amplitude and the second amplitude in the data at the timing when the peak is detected by the peak detector (120); and
a subtractor (145S) configured to determine the second ratio by subtracting the first ratio output from the storage device (145R) from a value "1".

11. The information processing apparatus (100) as claimed in claim 5, further comprising:
a plurality of third frequency shifters configured to shift the frequency of the first baseband signal to frequencies for a plurality of frequency bands of the first band;
a plurality of fourth frequency shifters configured to shift the frequency of the second baseband signal to frequencies for a plurality of frequency bands of the second band;
a second adder configured to adds a plurality of outputs of the plurality of third frequency shifters and output a result to the first frequency shifter (110A); and
a third adder configured to adds a plurality of outputs of the plurality of fourth frequency shifters and output a result to the second frequency shifter (110B), wherein:
a plurality of first amplitude calculators (140A) is provided in correspondence with the plurality of frequency bands of the first band, and determines a plurality of first amplitudes of signals in the plurality of frequency bands of the first baseband signal,
a plurality of second amplitude calculators (140B) is provided in correspondence with the plurality of frequency bands of the second band, and determines a plurality of second amplitudes of signals in the plurality of frequency bands of the second baseband signal,
the ratio derivation circuit (145) determines a plurality of first ratios of the plurality of first amplitudes with respect to the plurality of first amplitudes and the plurality of second amplitudes, and a plurality of second ratios of the plurality of second amplitudes with respect to the plurality of first amplitudes and the plurality of second amplitudes at the timing when the peak is detected by the peak detector (120),
a plurality of first impulse response generators (150A) is provided in correspondence with the plurality of frequency bands of the first band,
a plurality of second impulse response generators (150B) is provided in correspondence with the plurality of frequency bands of the second band;
the first multiplier (155A1, 155A2) generates a first peak suppression signal by performing a complex multiplication of a plurality of first impulse response signals generated by the plurality of first impulse response generators (150A), the plurality of first ratios, and the adjustment signal, and
the second multiplier (155B1, 155B2) generates a second peak suppression signal by performing a complex multiplication of a plurality of second impulse response signals generated by the plurality of first impulse response generators (150A), the plurality of second ratios, and the adjustment signal.

12. The information processing apparatus (100) as claimed in claim 4, wherein the ratio adjuster (140A, 140B, 145, 150A, 150B, 155A1, 155A2, 155B1, 155B2) includes:
a first impulse response generator (150A) configured to generate a first impulse response signal corresponding to the signal having the first frequency at the timing when the peak is detected by the peak detector (120);
a second impulse response generator (150B) configured to generate a second impulse response signal corresponding to the signal having the second frequency at the timing when the peak is detected by the peak detector (120);
a first amplitude calculator (140A) configured to determine a first amplitude of the signal having the first frequency;
a second amplitude calculator (140B) configured to determine the second amplitude of the signal having the second frequency;
a ratio derivation circuit (145) configured to determine the first ratio of the first amplitude with respect to the first amplitude and the second amplitude and the second ratio of the second amplitude with respect to the first amplitude and the second amplitude at the timing when the peak of the multiband signal is detected by the peak detector (120);
an adjustment signal generator (130) configured to generate an adjustment signal for adjusting the amplitude and phase of the first impulse response signal and the amplitude and phase of the second impulse response signal according to the phase θ of the multiband signal and the amplitude value of the peak of the multiband signal at the timing when the peak is detected by the peak detector (120);
composite arithmetic circuitry (155A1, 155B1, 157AB) configured to generate a combined impulse response signal by combining the first impulse response signal multiplied by the first ratio and the second impulse response signal multiplied by the second impulse response signal by the second ratio;
a multiplier (155AB) configured to generate a peak suppression signal by performing a complex multiplication of the combined impulse response signal and the adjustment signal; and
a subtractor (170AB) configured to subtract the peak suppression signal from the composite signal.

13. A communication device (10) comprising:
a transmission signal generator (21) configured to generate a first baseband signal for a first band and a second baseband signal for a second band;
an information processing apparatus (100) configured to receive the first baseband signal and the second baseband signal;
an adder (23) configured to generate a multiband signal by combining the first baseband signal and the second baseband signal having peaks suppressed by the information processing apparatus (100); and
a transmission circuit (40) configured to up-convert and amplify the multiband signal, wherein:
the information processing apparatus (100) includes:
a peak detector (120) configured to detects a peak of a signal based on the multiband signal in which the first baseband signal and the second baseband signal are combined;
a ratio adjuster (140A, 140B, 145, 150A, 150B, 155A1, 155A2, 155B1, 155B2) configured to adjust a ratio of a first peak suppression signal corresponding to the first baseband signal and a second peak suppression signal corresponding to the second baseband signal, according to amplitudes or power of the first baseband signal and the second baseband signal at a timing when the peak is detected;
peak suppression circuitry (170A, 170B) configured to suppress a peak of the multiband signal, using the first peak suppression signal and the second peak suppression signal having the adjusted ratio; and
output circuitry (102A, 102B, 102C) configured to output the multiband signal with the suppressed peak.

14. An information processing method implemented in an information processing apparatus (100) including a first input terminal (101A) configured to receive a first baseband signal, and a second input terminal (101B) configured to receive a second baseband signal, the information processing method comprising:
detecting a peak of a signal based on a multiband signal in which the first baseband signal and the second baseband signal are combined;
adjusting a ratio of a first peak suppression signal corresponding to the first baseband signal and a second peak suppression signal corresponding to the second baseband signal, according to amplitudes or power of the first baseband signal and the second baseband signal at a timing when the peak is detected;
suppressing the peak of the multiband signal using the first peak suppression signal and the second peak suppression signal having the adjusted ratio; and
outputting the multiband signal with the suppressed peak.
